(19) Europäisches Patentamt
European Patent Office
Office européen des brevets

(11) EP 2 444 464 A1

(12) EUROPEAN PATENT APPLICATION

(43) Date of publication:
**25.04.2012 Bulletin 2012/17**

(51) Int Cl.:
***C09D 183/08*** *(2006.01)* ***C12Q 1/00*** *(2006.01)*

(21) Application number: **10306146.1**

(22) Date of filing: **21.10.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Centre National de la Recherche Scientifique (CNRS)
75016 Paris (FR)**

(72) Inventors:
- **Dejardin, Philippe
34170, CASTELNAU LE LEZ (FR)**
- **Thami, Thierry
34270, SAINT-MATHIEU DE TERVIERS (FR)**
- **Janot,, Jean-Marc
34293, CARNON (FR)**
- **Ferez, Lynda
34090, MONTPELLIER (FR)**
- **Tauk, Lara
34000, MONTPELLIER (FR)**

(74) Representative: **Tetaz, Franck Claude Edouard et al
Cabinet Regimbeau
139, rue Vendôme
69477 Lyon Cedex 06 (FR)**

# (54) Novel neutral (bio)material

(57) The instant invention concerns
- a method for preparing a material comprising the following steps of a) treating the support to obtain a layer having SiH function, b) grafting the SiH layer obtained in step a) with an alkene and a catalyst for covalently bonding the alkene to the coating, said alkene being non-terminal and/or having an hydrophilic part, and c) recovering a material comprising a support coated with a chain covalently grafted with Si-C bonds,
- a material comprising a support, optionally comprising a polyhydrosiloxane layer, on which surface is covalently bonded a grafted chain, wherein the covalent bonding between the support and/or the polyhydrosiloxane and the chain is an Si-C bond, and the grafted chain is bonded through a non-terminal carbon, through more than one covalent bond and/or the chain is having at least one hydrophilic part, and
- devices comprising such material.

EP 2 444 464 A1

Printed by Jouve, 75001 PARIS (FR)

**Description**

## FIELD OF THE INVENTION

The instant invention concerns a material presenting a neutral behaviour, in particular avoiding non specific adsorption, on its surface. Optionally, this material may be functionalized. This material may have applications and uses in various fields, such as medicine, diagnosis, detection, biomaterials, antibacterial material, biosensors, medical devices. The instant invention also concerns methods for obtaining such materials.

## PRIOR ART

Many new materials were and are developed. However, especially in specific fields, in particular related to medicine, these materials are often exhibiting insufficient properties, in particular in terms of neutral behaviour, of antibacterial and/or antifungal properties, of anti-adhesive properties, of price, of sensitivity, of easiness to be obtained and/or to be used. More particularly, segregation can occur, meaning the compounds of the same nature are getting together, thus meaning to material having a non-homogeneous surface.

For example, the well-functioning of sensors for biomedical analysis is dependent on the integrity and accessibility of the surface-fixed molecule designed to molecular recognition, on one hand, and on the surroundings designed for neutral behaviour, especially to avoid non specific adsorption, on the other hand.

The last property is also required for biomaterials where the biological functions of the fluid components have to be preserved. For instance, the proteins should present no conformational changes in solution, possibly induced by adsorption at interfaces, as they could trigger cascades of biological reactions. Even active biomaterials for cell culture for instance could be considered as surfaces with specific anchoring and functional points positioned on a neutral surface.

Several strategies were considered to create surfaces of neutral behaviour. They can be roughly classified in two categories:

- the first class is based on poly(ethylene oxide) - PEO -,
- the second one on zwitterionic groups, especially the phosphorylcholine head.

Argument for their efficiency is that they are very hydrophilic. They can retain numerous molecules of water. The choice of phosphorylcholine (PC) head is justified by the large presence of phospholipids with that head on the external side of the bilayer membrane of cells. Phospholipid polymers were developed many years ago. The availability of monomer 2-methacryloyloxyethyl phosphorylcholine (MPC) has induced several works with polymers based on this monomer. Modification of existing polymers with PC side chains was carried out for polyelectrolyte multilayer applications.

However, known methods for preparing such materials may be expansive, difficult to do, having poor yield, leading to material having segregation, leading to insufficiently neutral material, thus requiring at least one step of passivation.

For example, the method of copolymerising PC methacrylate may lead to a material having unstable interface, which may be due to segregation. Such a method is complex, in particular with the choice of the comonomer depending on the surface to treat, thus needing one synthesis for each desired composition.

Concerning the known materials, they may be insufficiently versatile, have insufficient properties, for example in terms of neutrality, homogeneity, or quality.

For example the material may exhibit unwanted segregation and a non homogeneous interface.

The invention thus aims to solve, all or in part, the problems listed above.

In particular the invention aims to provide a material which is easy to obtain, cheap, versatile, which has by itself excellent passivity properties, i.e. a very low non specific adsorption of molecules, such as proteins, and a very good neutral behaviour, which can be functionalized easily and/or with many types of compounds.

The method of the invention also aims to be easy, cheap, versatile, efficient, and/or ecologic.

## SUMMARY OF THE INVENTION

Following a first aspect, the invention has for subject matter a material comprising a support, optionnally comprising a polyhydrosiloxane layer, on which surface is covalently bonded a chain, wherein:

- the covalent bonding between the support and/or the polyhydrosiloxane and the chain is an Si-C bond, and
- the chain is bonded through a non-terminal carbon, through more than one covalent bond and/or the chain is having at least one hydrophilic part.

Following a second aspect, the invention has for subject matter a method for preparing a material comprising the following steps:

a) treating the support to obtain a layer having SiH function,
b) grafting the SiH obtained in step a) with an alkene and a catalyst for covalently bonding the alkene to the coating, said alkene being non-terminal and/or having an hydrophilic part,
c) recovering a material comprising a support coated with a chain covalently grafted with Si-C bonds.

**BRIEF DESCRIPTION OF THE FIGURES**

Figure 1a presents IR spectra of films PL-PMHS (A), PMHS (B) and unreacted PL on silicon wafer.
Figure 1b is a zoom of the spectra (A) and (C) in the absorption domain of double bonds.
Figure 2 represents a PolyMethylHydroSiloxane (PMHS) network in an embodiment of the invention
Figure 3 represents grafting of an alkene on PMHS via hydrosilylation.
Figure 4 (left) shows an air bubble in water contacting the PL-PMHS layer (PL is the PhosphoLipid 1,2-dilinoleyl-sn-glycero-3-phosphocholine (18:2 Cis), PMHS is PolyMethylHydroSiloxane). This illustrates the hydrophilicity of the PL-PMHS layer when said layer is contacted by water.
Figure 4 (right) shows a SEM picture (Hitachi S4800 apparatus) of a thick PL-PMHS layer with regular grooves of around 100 nm deep.
Figure 5 represents the avidin adsorption kinetics in PBS, pH 7.4, with a PL-PMHS material where PL is the PhosphoLipid 1,2-dilinoleyl-sn-glycero-3-phosphocholine (18:2 Cis), PMHS is PolyMethylHydroSiloxane, and the PMHS layer thickness is 1 $\mu$m.
Figure 6 represents two different ways of grafting alexa® on a PL-PMHS material.
Figure 7 illustrates the absence of adsorption of bovine serum albumin (BSA), $\alpha$-chymotrypsin and cytochrome-C on PL-PMHS material.

**DETAILED DESCRIPTION OF THE INVENTION**

The invention has for subject matter a material comprising a support, optionally comprising a polyhydrosiloxane layer, on which surface is covalently bonded a grafted chain, wherein:

- the covalent bonding between the support and/or the polyhydrosiloxane and the chain is an Si-C bond, and
- the chain is bonded through a non-terminal carbon, through more than one, at least two, three or four, covalent bonds and/or the chain is having at least one hydrophilic part.

The support may directly bond a chain or it may bond a grafted chain through a polyhydrosiloxane layer.
In the first case, the support, which may be crystalline silicone or silicon elastomers, exhibits on its surface a layer covalently bonded to the grafted chain.
In the second case, the support may be coated with a polyhydrosiloxane. The support may thus be bonded to the polyhydrosiloxane. The bonding may be done through covalent bonding and/or physical bonding. Physical bonding may be polar affinity and/or interpenetration of the polyhydrosiloxane with the surface of the support.
In a preferred embodiment, the support is covalently bonded with the polyhydrosiloxane.
In this case, the support thus comprises atoms or functions able to form covalent bonds, directly or indirectly with Silicon. A direct bonding being of the support-Si type, an indirect bonding being a bonding to an atom bonded to Si, such as O or N, in this case the bonding being of the support-O-Si or support-N-Si type.
In particular, the surface of the support may be treated by silicon nitride or silicon oxynitride ($SiO_xN_y$). This may create functions on the support allowing it to bond, in particular via covalent bonds, with the polyhydrosiloxane.
More particularly, the support is chosen from glass, silicon oxide, silicon oxynitride, silicon nitride, aluminium oxide, titanium oxide, tin oxide, gold, platinum, polysaccharides, in particular celluloses, polymers, in particular:

- polar polymers, such as synthetic polar polymers, more particularly as polycarbonates, polyurethanes, polyvinylchloride, polymethacrylates, polysulfones, polyacrylonitriles, or such as natural polar polymers such polysaccharides, more particularly celluloses, and
- apolar polymers, such as polyethylenes, polystyrenes, polyethyleneterephtalates (PET).

In case of oxides, such as glass, silicon oxide, aluminium oxide, titanium, in particular via a titanium dioxide

($TiO_2$) layer, tin oxide, the bonding may be M-O-Si.

In case of Gold or Platinum the bonding may be obtained from reaction with Si-Au or Si-Pt.

When the support is polar polymer of cellulose type, the bonding may be Si-O-cellulose and/or physical bond, such as polar affinity.

Polar polymers may comprise heteroatom(s) in their monomer units.

When the support is polar polymer of polycarbonate type, the bonding may be Si-O-C=O- and/or physical bond, such as polar affinity.

When the support is an apolar polymer, for example polyethylene, polystyrene, polyethyleneterephtalate (PET), the bonding may be obtained through physical bond, such as polar affinity and interpenetration of the polyhydrosiloxane chains with the polymer of the support, such as entanglement or interdigitation.

The apolar polymers may comprise only or almost only carbon and hydrogen atoms. In particular the apolar polymers consist of alkyl or aromatic parts.

The apolar polymer may comprise only carbon and hydrogen atoms.

The support may have a thickness going from about 10 μm, such as film polymer or membrane, to 1 m.

The SiH layer may be a layer of the support, for example obtained through a treatment of the support or may be a layer of polyhydrosiloxane bonded to the support.

The polyhydrosiloxane may be a polyalkylhydrosiloxane (PAHS). The alkyl may be chosen from methyl, ethyl, propyl, n-propyl or i-propyl, butyl, n-butyl, sec-butyl or t-butyl.

The polyhydrosiloxane is in particular a polymethylhydrosiloxane (PMHS).

The polyhydrosiloxane exhibits, in particular only, Si-H function, in particular as "reactive" functions. There may be some other functions on the polyhydrosiloxane, such as Si-OH. In particular, these other functions are at the end of the siloxane chains.

Following an embodiment, the polyhydrosiloxane is crosslinked. In particular the crosslinked polyhydrosiloxane PAHS has the following Formula A:

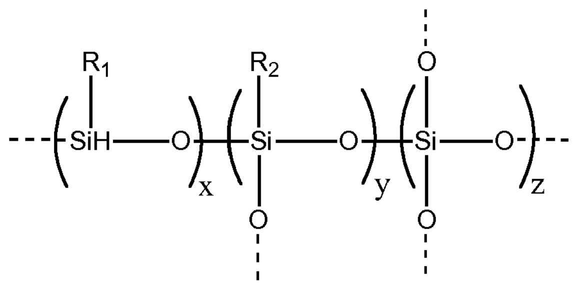

Formula A

wherein

- x,y,z are each from 0 to 1 ; x + y + z = 1 ; and x > 0,
- $R_1$ is an alkyl, in particular chosen from methyl, ethyl, propyl, n-propyl or i-propyl, butyl, n-butyl, sec-butyl or t-butyl, and
- $R_2$ is an atom of H or an akyl, in particular chosen methyl, ethyl, propyl, n-propyl or i-propyl, butyl, n-butyl, sec-butyl or t-butyl.

Several type of -($SiHR_1O$)- may be used, for example one with $R_1$ being methyl and another one with $R_1$ being ethyl and/or several type of -($SiR_2O_{2/2}$)- may be used, for example one with $R_2$ being methyl and another one with $R_2$ being H.

In particular z is 0, $R_1$ is Me and $R_2$ is H.

The ratio x/y may range from 100/0 to 0/100, in particular from 99/1 to 50/50, and more particularly from 95/5 to 70/30, and z may be 0.

The polyhydrosiloxane layer may have a structure such as the one shown in figure 2.

Following another embodiment, the polyhydrosiloxane is linear. In particular the linear polyhydrosiloxane PAHS has the following Formula B:

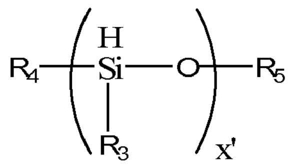

Formula B

wherein

- 5 < x' < 20000, in particular 10 < x' < 20000, more particularly 100 < x' < 20000,
- $R_3$ represents an alkyl which may be chosen from methyl, ethyl, propyl, n-propyl or i-propyl, butyl, n-butyl, sec-butyl or t-butyl,
- $R_4$ may be OH or -O-blocking end group, such as -O-trialkylsilyl group, in particular -O-trimethylsilyl group, and
- $R_5$, independently, may be H or blocking end group, such as trialkylsilyl group, in particular trimethylsilyl group.

The PAHS, in particular the PMHS, coating may be under the form of a film. The PAHS, in particular the PMHS, film may have a thickness going from 5 nm to 20 μm, in particular going from 10 nm to 10 μm.

The PAHS coating may be under the form of a gel. The PAHS coating may come from the one or several, in particular two of the following monomers, $HSiR(OR_a)_2$, $HSi(OR_b)_3$, $Si(OR_c)_4$ where R, $R_a$, $R_b$ and $R_c$ are the same or different and may be alkyl chosen from methyl, ethyl, propyl, n-propyl or i-propyl, butyl, n-butyl, sec-butyl or t-butyl.

More particularly, the PAHS is PMHS resulting from the polymerisation of $HSiR(OR_a)_2$ and/or $HSi(OR_b)_3$, in particular with R = Me, $R_a$ and $R_b$ being Et.

Both monomers may be used with ratios going from 1/100 to 100/1, more particularly from 5/95 to 95/5, even more particularly from 95/5 to 70/30. When both monomers are used, it leads to a crosslinked PMHS.

The chain grafted to the SiH layer, and in particular to the polyhydrosiloxane, is bonded through a carbon-silicon (C-Si) covalent bond.

The grafted chain may derive from a molecule having several carbon-carbon double bonds, one carbon-carbon double bond which is not on a terminal carbon, and/or having an amphiphilic structure.

The grafted chain may derive from any type of amphiphilic molecule having at least one carbon-carbon double bond on an aliphatic part, and having:

- more than one double-bond,
- one double bond not on the terminal carbon.

The material may comprise different grafted chains. For example, the material may comprise two, three or four different grafted chains.

The grafted chain comprises a part A comprising at least two adjacent carbon atoms, each bearing at least one hydrogen atom.

In particular the grafted chain may comprise a polyether part, such as PEG or PPG.

More particularly, the grafted chain comprises a part A comprising, or consisting, of at least 6, in particular at least 8, more particularly at least 10, even more particularly at least 12, still more particularly at least 14, for example at least 16, and in particular at least 18 carbon atoms. This part A may comprise, or consist, of linear, branched or cyclic alkyl, and/or aryl. In particular part A comprises only C and H atoms.

Thus, the part A may be hexyl, heptyl, octyl, nonyl, decyl, undecyl, dodecyl, tetradecyl, pentadecyl, hexadecyl, heptadecyl, octadecyl, phenyl, biphenyl, benzyl, naphtyl, binaphtyl, benzyle, and alkylaryl residues.

More particularly, the part A is hydrophobic. Hydrophobic may mean that in part A there is only carbon and hydrogen atoms.

Following a first embodiment, the chain is covalently bonded to silicon from the polyhydrosiloxane through a carbon which is not a terminal carbon.

Following a second embodiment, one chain, and more particularly one part A, is covalently bonded to the polyhydrosiloxane through at least two, in particular two, three or four, carbon-silane covalent bonds. Following a third embodiment, the grafted chain comprises a hydrophilic part. In particular the hydrophilic part is bearing polar function (s), such as ammonium, phosphates, alcohols, thiols, sulfonates, carboxylic acids, and more particularly zwitterionic species such as phosphoammoniums, sulfobetaine and carboxybetaine.

More particularly, the hydrophilic part is charged.

The hydrophilic part may be anionic, for example bearing functions such as phospho or phosphates and/or

sulfonates.

The hydrophilic part may be cationic for example bearing functions such as ammonium, in particular tetralkylammonium.

More particularly, the hydrophilic part is zwitterionic, for example bearing functions such as phosphoryl and ammonium on the same chain. Even more particularly, these positive and the negative charges are separated by eight or less atoms, in particular six or less atoms and in particular four or less atoms.

Among the zwitterionic species can be cited:

- phosphoammoniums,
- sulfobetaines, and
- carboxybetaines.

More specifically, the grafted chain comprises:

- at least one part A which derives from a fatty acid without terminal unsaturation and being covalently bond several times with the polyhydrosiloxane, and
- at least one hydrophilic part which is zwitterionic.

Following a specific embodiment, the part(s) A and the hydrophilic part(s) is(are) linked through a diol or triol, such as glycerol, through for example ether, amine, ester or amide bonds.

The grafted chain may comprise:

- at least one part A, more specifically one two or three part(s) A, comprising at least 6, in particular at least 8, more particularly at least 10, even more particularly at least 12, still more particularly at least 14, for example at least 16, and in particular at least 18 carbon atoms, and
- at least one hydrophilic part which may be :

    o non charged, for example comprising ester or alcohol functions,
    o positively charged, for example comprising ammonium function(s),
    o negatively charged, for example comprising phosphate functions, sulfonate functions
    o zwitterionic, for example comprising ammonium and phosphate functions.

The grafted chain may derive from:

- non charged glycerolipids, in particular glyceryl bearing two or three chains hydrocarbon chains, and among which one, two or three have unsaturated double bonds,
- charged glycerolipids, in particular glyceryl bearing two or three chains hydrocarbon chains, among which one, two or three have unsaturated double bonds,and

    o a hydrophilic part comprising zwitterionic species, such as phosphocholine, phosphethanolamine, phosphoserine,
    o a hydrophilic part comprising negatively charged species, such as phosphorglycerol, phosphate, phosphoinositol,
    o a hydrophilic part comprising positively charged species, such as ammonium, in particular tetraalkylammonium.

In particular the grafted chain(s) is(are) phospholipid(s) with saturated fatty acid(s). They may derive from phospholipids with unsaturated fatty acid parts.

The grafted chain may have a phosphocholine part, a glycerol phosphocholine, a phosphoetanolamine part, a glycerophosphoethanolamine part, a phosphoglycerol part, a glycerophosphoglycerol part, a bis-[glycero-3-phospho]-glycerol part, a phosphate part, an inositol phosphate part, a glycerophosphate part, a glycerocyclicphosphate part, a glycerophosphothionate part, a phosphoserine part, a glycerophosphoserine part, or a mixture of theses parts.

To these parts are linked chains, in particular alkyl chains, more particularly deriving from saturated or unsaturated fatty acids, indirectly or directly, for example through ether or ester bonds.

More particularly, the grafted chains may derive from the following compounds:

- L-alpha-phosphatidylcholine (Egg), CAS number 97281-44-2, commercially available by Avanti, number 840051,
- Lecithin (Egg), CAS number 97281-47-5, commercially available by Avanti, number 131601,
- L-alpha-phosphatidylcholine (Soy), CAS number 97281-47-5, commercially available by Avanti, number 840054,

- Lecithin (Soy), commercially available by Avanti, number 441601,
- L-alpha-phosphatidylcholine (Heart), commercially available by Avanti, number 840052,
- L-alpha-phosphatidylcholine (Brain), CAS number 383907-52-6, commercially available by Avanti, number 840053,
- L-alpha-phosphatidylcholine (Liver), CAS number 475662-36-3, commercially available by Avanti, number 850346,
- 1,2-di-(9Z-tetradecenoyl)-sn-glycero-3-phosphocholine,
- 1,2-di-(9E-tetradecenoyl)-sn-glycero-3-phosphocholine,
- 1,2-di-(9Z-hexadecenoyl)-sn-glycero-3-phosphocholine,
- 1,2-di-(9E-hexadecenoyl)-sn-glycero-3-phosphocholine,
- 1,2-di-(6Z-octadecenoyl)-sn-glycero-3-phosphocholine,
- 1,2-di-(9Z-octadecenoyl)-sn-glycero-3-phosphocholine,
- 1,2-di-(9E-octadecenoyl)-sn-glycero-3-phosphocholine,
- 1,2-di-(9Z,12Z-octadecadienoyl)-sn-glycero-3-phosphocholine,
- 1,2-di-(9Z,12Z,15Z-octadecatrienoyl)-sn-glycero-3-phosphocholine,
- 1,2-di-(11Z-eicosenoyl)-sn-glycero-3-phosphocholine,
- 1,2-di-(5Z,8Z, 11 Z, 14Z-eicosatetraenoyl)-sn-glycero-3-phosphocholine,
- 1,2-di-(13Z-docosenoyl)-sn-glycero-3-phosphocholine,
- 1,2-di-(4Z,7Z, 10Z, 13Z, 16Z, 19Z-docosahexaenoyl)-sn-glycero-3-phosphocholine,
- 1,2-di-(15Z-tetracosenoyl)-sn-glycero-3-phosphocholine,
- 1-hexadecanoyl-2-(9Z-octadecenoyl)-sn-glycero-3-phosphocholine,
- 1-hexadecanoyl-2-(9Z,12Z-octadecadienoyl)-sn-glycero-3-phosphocholine,
- 1-hexadecanoyl-2-(5Z,8Z,11Z,14Z-eicosatetraenoyl)-sn-glycero-3-phosphocholine,
- 1-hexadecanoyl-2-(4Z,7Z, 10Z, 13Z, 16Z, 19Z-docosahexaenoyl)-sn-glycero-3-phosphocholine,
- 1-octadecanoyl-2-(9Z-octadecenoyl)-sn-glycero-3-phosphocholine,
- 1-octadecanoyl-2-(9Z,12Z-octadecadienoyl)-sn-glycero-3-phosphocholine,
- 1-octadecanoyl-2-(5Z,8Z,11Z,14Z-eicosatetraenoyl)-sn-glycero-3-phosphocholine,
- 1-octadecanoyl-2-(4Z,7Z,10Z,13Z,16Z,19Z-docosahexaenoyl)-sn-glycero-3-phosphocholine,
- 1-(9Z-octadecenoyl)-2-tetradecanoyl-sn-glycero-3-phosphocholine,
- 1-(9Z-octadecenoyl)-2-hexadecanoyl-sn-glycero-3-phosphocholine,
- 1-(9Z-octadecenoyl)-2-octadecanoyl-sn-glycero-3-phosphocholine,
- Lysophosphatidylcholine (Soy), CAS number 97281-38-4, commercially available by Avanti, number 840072,
- 1-(9Z-octadecenoyl)-sn-glycero-3-phosphocholine,
- Cardiolipin (Heart), CAS number 383907-10-6, commercially available by Avanti, number 840012,
- Cardiolipin (E. coli), CAS number 796964-05-1, commercially available by Avanti, number 841199,
- 1',3'-bis[1,2-di-(9Z-octadecenoyl)-sn-glycero-3-phospho]-sn-glycerol,
- Monolysocardiolipin (Heart), commercially available by Avanti, number 840081,
- Dilysocardiolipin (Heart), commercially available by Avanti, number 850082,
- bis(monooleoylglycero)phosphate (S,R isomer),
- bis(monooleoylglycero)phosphate (S,S isomer),
- bis(monooleoylglycero)phosphate (R,R isomer),
- bis(diooleoylglycero)phosphate (S,S isomer),
- sn-(3-oleoyl-2-hydroxy)-glycerol-1-phospho-sn-3'-(1',2'-dioleoyl)-glycerol,
- 1,2-di-O-octadecenyl-sn-glycero-3-phosphocholine,
- 1-(1Z-octadecenyl)-2-(9Z-octadecenoyl)-sn-glycero-3-phosphocholine,
- 1-(1 Z-octadecenyl)-2-(5Z,8Z, 11 Z, 14Z-eicosatetraenoyl)-sn-glycero-3-phosphocholine,
- 1-(1Z-octadecenyl)-2-(4Z, 7Z, 10Z,13Z, 16Z, 19Z-docosahexaenoyl)-sn-glycero-3-phosphocholine,
- 1-O-1'(Z)-octadecenyl)-2-hydroxy-sn-glycero-3-phosphocholine,
- 1-(1Z-octadecenyl)-2-(9Z-octadecenoyl)-sn-glycero-3-phosphoethanolamine,
- 1-(1Z-octadecenyl)-2-(5Z,8Z, 11Z, 14Z-eicosatetraenoyl)-sn-glycero-3-phosphoethanolamine,
- 1-(1Z-octadecenyl)-2-(4Z,7Z, 10Z, 13Z, 16Z, 19Z-docosahexaenoyl)-sn-glycero-3-phosphoethanolamine,
- 1-palmitoyl-2-cholesterylhemisuccinoyl-sn-glycero-3-phospshocholine,
- 1-oeloyl-2-cholesterylhemisuccinoyl-sn-glycero-3-phospshocholine,
- 1-palmitoyl-2-cholesterylcarbonoyl-sn-glycero-3-phospshocholine,
- 1,2-dicholesterylhemisuccinoyl-sn-glycero-3-phospshocholine,
- L-alpha-phosphatidylinositol (Liver), CAS number 383907-33-3 commercially available by Avanti, number 840042,
- L-alpha-phosphatidylinositol (Soy), CAS number 383907-36-6, commercially available by Avanti, number 840044,
- L-alpha-phosphatidylinositol PI(4)P (Brain), CAS number 475995-51-8, commercially available by Avanti, number 840045,
- L-alpha-phosphatidylinositol PI(4,5)$P_2$ (Brain), CAS number 383907-42-4, commercially available by Avanti, number

840046,

- 1,2-di-(9Z-octadecenoyl)-sn-glycero-3-phospho-(1'-myo-inositol),
- 1,2-di-(9Z-octadecenoyl)-sn-glycero-3-phospho-(1'-myo-inositol-3'-phosphate),
- 1,2-di-(9Z-octadecenoyl)-sn-glycero-3-phospho-(1'-myo-inositol-5'-phosphate),
- 1,2-di-(9Z-octadecenoyl)-sn-glycero-3-phospho-(1'-myo-inositol-3',4'-bisphosphate),
- 1,2-di-(9Z-octadecenoyl)-sn-glycero-3-phospho-(1'-myo-inositol-3',5'-bisphosphate),
- 1,2-di-(9Z-octadecenoyl)-sn-glycero-3-phospho-(1'-myo-inositol-4',5'-bisphosphate),
- 1,2-di-(9Z-octadecenoyl)-sn-glycero-3-phospho-(1'-myo-inositol-3',4',5'-trisphosphate),
- 1-octadecanoyl-2-(5Z,8Z,11Z,14Z-eicosatetraenoyl)-sn-glycero-3-phospho-(1'-myo-inositol-3',5'-bisphosphate),
- 1-octadecanoyl-2-(5Z,8Z,11Z,14Z-eicosatetraenoyl)-sn-glycero-3-phospho-(1'-myo-inositol-4',5'-bisphosphate),
- 1-octadecanoyl-2-(5Z,8Z,11Z,14Z-eicosatetraenoyl)-sn-glycero-3-phospho-(1'-myo-inositol-3',4',5'-trisphosphate),
- 1-(9Z-octadecenoyl)-2hydroxy)-sn-glycero-3-phospho-(1'-myo-inositol),
- L-alpha-Phosphatidylserine (Brain), CAS number 383907-32-2, commercially available by Avanti, number 840032,
- L-alpha-Phosphatidylserine (Soy), CAS number 383908-63-2, commercially available by Avanti, number 840036,
- 1,2-di-(9Z-octadecenoyl)-sn-glycero-3-phospho-L-serine,
- 1,2-di-(9Z,12Z-octadecadienoyl)-sn-glycero-3-phospho-L-serine,
- 1,2-di-(5Z,8Z, 11Z, 14Z-eicosatetraenoyl)-sn-glycero-3-phospho-L-serine,
- 1,2-di-(4Z, 7Z, 10Z, 13Z, 16Z, 19Z-docosahexaenoyl)-sn-glycero-3-phospho-L-serine,
- 1-hexadecanoyl-2-(9Z-octadecenoyl)-sn-glycero-3-phospho-L-serine,
- 1-hexadecanoyl-2-(9Z,12Z-octadecadienoyl)-sn-glycero-3-phospho-L-serine,
- 1-hexadecanoyl-2-(5Z,8Z,11Z,14Z-eicosatetraenoyl)-sn-glycero-3-phospho-L-serine,
- 1-hexadecanoyl-2-(4Z,7Z, 10Z, 13Z, 16Z, 19Z-docosahexaenoyl)-sn-glycero-3-phospho-L-serine,
- 1-octadecanoyl-2-(9Z-octadecenoyl)-sn-glycero-3-phospho-L-serine,
- 1-octadecanoyl-2-(9Z,12Z-octadecadienoyl)-sn-glycero-3-phospho-L-serine,
- 1-octadecanoyl-2-(5Z,8Z,11Z,14Z-eicosatetraenoyl)-sn-glycero-3-phospho-L-serine,
- 1-octadecanoyl-2-(4Z,7Z,10Z,13Z,16Z,19Z-docosahexaenoyl)-sn-glycero-3-phospho-L-serine,
- 1-9Z-octadecenoyl-sn-glycero-3-phospho-L-serine,
- L-alpha-phosphatidylglycerol (Egg),,CAS number 383907-64-0, commercially available by Avanti, number 841138,
- L-alpha-phosphatidyl-DL-glycerol (Soy), commercially available by Avanti, number 841148,
- 1,2-di-(9Z-octadecenoyl)-sn-glycero-3-phospho-(1'-rac-glycerol),
- 1,2-di-(9E-octadecenoyl)-sn-glycero-3-phospho-(1'-rac-glycerol),
- 1,2-di-(9Z,12Z-octadecadienoyl)-sn-glycero-3-phospho-(1'-rac-glycerol),
- 1,2-di-(9Z,12Z,15Z-octadecatrienoyl)-sn-glycero-3-phospho-(1'-rac-glycerol),
- 1,2-di-(5Z,8Z, 11Z, 14Z-eicosatetraenoyl)-sn-glycero-3-phospho-(1'-rac-glycerol),
- 1,2-di-(4Z,7Z, 10Z, 13Z,16Z, 19Z-docosahexaenoyl)-sn-glycero-3-phospho-(1'-rac-glycerol),
- 1-hexadecanoyl-2-(9Z-octadecenoyl)-sn-glycero-3-phospho-(1'-rac-glycerol),
- 1-hexadecanoyl-2-(9Z,12Z-octadecadienoyl)-sn-glycero-3-phospho-(1'-rac-glycerol),
- 1-hexadecanoyl-2-(5Z,8Z,11Z,14Z-eicosatetraenoyl)-sn-glycero-3-phospho-(1'-rac-glycerol),
- 1-hexadecanoyl-2-(4Z,7Z, 10Z, 13Z, 16Z, 19Z-docosahexaenoyl)-sn-glycero-3-phospho-(1'-rac-glycerol),
- 1-octadecanoyl-2-(9Z-octadecenoyl)-sn-glycero-3-phospho-(1'-rac-glycerol),
- 1-octadecanoyl-2-(9Z,12Z-octadecadienoyl)-sn-glycero-3-phospho-(1'-rac-glycerol),
- 1-octadecanoyl-2-(5Z,8Z, 11 Z, 14Z-eicosatetraenoyl)-sn-glycero-3-phospho-(1'-rac-glycerol),
- 1-octadecanoyl-2-(4Z,7Z,10Z,13Z,16Z,19Z-docosahexaenoyl)-sn-glycero-3-phospho-(1'-rac-glycerol),
- 1-(9Z-octadecenoyl)-sn-glycero-3-phospho-(1'-rac-glycerol),
- L-alpha-phosphatidyl-ethanolamine (Egg), commercially available by Avanti, number 840021,
- L-alpha-phosphatidyl-ethanolamine transphosphatidylated (Prepared from Egg PC), commercially available by Avanti, number 841118, CAS number 383907-63-9,
- L-alpha-phosphatidyl-ethanolamine (Heart), commercially available by Avanti, number 840025, CAS number 477241-93-3,
- L-alpha-phosphatidyl-ethanolamine (Brain), commercially available by Avanti, number 840022, CAS number 383907-18-4,
- L-alpha-phosphatidyl-ethanolamine (Liver), commercially available by Avanti, number 840026, CAS number 383907-31-1,
- L-alpha-phosphatidyl-ethanolamine (Soy), commercially available by Avanti, number 840024, CAS number 97281-51-1,
- L-alpha-phosphatidyl-ethanolamine (E. coli), CAS number 94581-14-3, commercially available by Avanti, number 840027,

- 1,2-di-(9Z-hexadecenoyl)-sn-glycero-3-phosphoethanolamine,
- 1,2-di-(9Z-octadecenoyl)-sn-glycero-3-phosphoethanolamine,
- 1,2-di-(9E-octadecenoyl)-sn-glycero-3-phosphoethanolamine,
- 1,2-di-(9Z,12Z-octadecadienoyl)-sn-glycero-3-phosphoethanolamine,
- 1,2-di-(9Z,12Z,15Z-octadecatrienoyl)-sn-glycero-3-phosphoethanolamine,
- 1,2-di-(5Z,8Z,11Z,14Z-eicosatetraenoyl)-sn-glycero-3-phosphoethanolamine,
- 1,2-di-(4Z,7Z, 10Z, 13Z, 16Z, 19Z-docosahexaenoyl)-sn-glycero-3-phosphoethanolamine,
- 1-hexadecanoyl-2-(9Z-octadecenoyl)-sn-glycero-3-phosphoethanolamine,
- 1-hexadecanoyl-2-(9Z,12Z-octadecadienoyl)-sn-glycero-3-phosphoethanolamine,
- 1-hexadecanoyl-2-(5Z,8Z,11Z,14Z-eicosatetraenoyl)-sn-glycero-3-phosphoethanolamine,
- 1-hexadecanoyl-2-(4Z,7Z, 10Z, 13Z, 16Z, 19Z-docosahexaenoyl)-sn-glycero-3-phosphoethanolamine,
- 1-octadecanoyl-2-(9Z-octadecenoyl)-sn-glycero-3-phosphoethanolamine,
- 1-octadecanoyl-2-(9Z,12Z-octadecadienoyl)-sn-glycero-3-phosphoethanolamine,
- 1-octadecanoyl-2-(5Z,8Z,11Z,14Z-eicosatetraenoyl)-sn-glycero-3-phosphoethanolamine,
- 1-octadecanoyl-2-(4Z,7Z,10Z,13Z,16Z,19Z-docosahexaenoyl)-sn-glycero-3-phosphoethanolamine,
- Lysophosphoethanolamine plasmanogen (Brain), commercially available by Avanti, number 850095,
- 1-(9Z-octadecenoyl)-sn-glycero-3-phosphoethanolamine,
- L-alpha-phosphatidic acid (Egg), CAS number 383906-53-7, commercially available by Avanti, number 840101,
- L-alpha-phosphatidic acid (Soy), CAS number 475995-54-1, commercially available by Avanti, number 840074,
- 1,2-di-(9Z-octadecenoyl)-sn-glycero-3-phosphate,
- 1,2-di-(9Z,12Z-octadecadienoyl)-sn-glycero-3-phosphate,
- 1,2-di-(5Z,8Z,11 Z, 1 4Z-eicosatetraenoyl)-sn-glycero-3-phosphate,
- 1,2-di-(4Z,7Z,10Z,13Z,16Z,19Z-docosahexaenoyl)-sn-glycero-3-phosphate,
- 1-hexadecanoyl-2-(9Z-octadecenoyl)-sn-glycero-3-phosphate,
- 1-hexadecanoyl-2-(9Z,12Z-octadecadienoyl)-sn-glycero-3-phosphate,
- 1-hexadecanoyl-2-(5Z,8Z,11Z,14Z-eicosatetraenoyl)-sn-glycero-3-phosphate,
- 1 -hexadecanoyl-2-(4Z,7Z, 10Z, 13Z, 16Z, 19Z-docosahexaenoyl)-sn-glycero-3-phosphate,
- 1-octadecanoyl-2-(9Z-octadecenoyl)-sn-glycero-3-phosphate,
- 1-octadecanoyl-2-(9Z,12Z-octadecadienoyl)-sn-glycero-3-phosphate,
- 1-octadecanoyl-2-(5Z,8Z,11Z,14Z-eicosatetraenoyl)-sn-glycero-3-phosphate,
- 1-octadecanoyl-2-(4Z,7Z,10Z,13Z,16Z,19Z-docosahexaenoyl)-sn-glycero-3-phosphate,
- 1-(9Z-octadecenoyl)-sn-glycero-3-phosphate,
- 1-(5Z,8Z,11 Z, 14Z-eicosatetraenoyl)-sn-glycero-3-phosphate,
- 1-(9Z-octadecenyl)-sn-glycero-3-phosphate,
- 1-(9Z-octadecenoyl)-sn-glycero-2,3-cyclic-phosphate,
- 1-(9Z-octadecenyl)-sn-glycero-2,3-cyclic-phosphate,
- 1-(9Z-octadecenoyl)-2-methyl-sn-glycero-3-phosphothionate,
- 1,2-dilinoleoyl-sn-glycero-3-phosphocholine (18:2 cis),
- 1,2-dioleoyl-sn-glycero-3-phosphocholine (DOPC),
- 1,2-dilinolenoyl-sn-glycero-3-phosphocholine,
- 1-stearoyl-2-oleoyl-sn-Glycero-3-phosphorylcholine,
- 1-stearoyl-2-linoleoyl-sn-Glycero-3-phosphorylcholine,

their mixtures and their salts, in particular sodium and ammonium.

Many of these compounds are commercially available through Avanti Company.

An example of grafted chain is a residue from unsaturated di-fatty acyl-sn-glycero-phosphorylcholine, more specifically 1,2-dilinoleoyl-sn-glycero-3-phosphocholine (18:2 cis) or 1-stearoyl-2-oleoyl-sn-Glycero-3-phosphorylcholine (18:0 18:1 cis).

Furthermore, the material may be functionalised, for example through bonding with the Si-OH parts of the grafted polyhydrosiloxane.

The functionalisation may be done directly or through a linker.

The linker may be linked to polyhydrosiloxane coating through a Si-O-Si bond one Si being from the polyhydrosiloxane coating and the other from the linker.

The linker may be linked to the functionalising molecule through a covalent bond such as amide.

The linker may derive from compounds of the following type: $(X)_3Si(CH_2)_pY$, $(X)_2ZSi(CH_2)_qY$ or $XZZ'Si(CH_2)_rY$, wherein

p, q and r are numbers ranging from 1 to 10,

X is a hydrolysable group, such as alcoxy, aryloxy, halide, amino, acyloxy in particular -Cl, -OMe, -OEt, $-NMe_2$,

Y is $-NH_2$, -SCN, epoxyde, vinyl, -Cl, methacrylate, ureido, and

Z and Z' are alkyl, such as methyl , ethyl, propyl.

Thus the linker may be $(Coating)_3Si(CH_2)$pfunctionalising molecule, $(Coating)_2ZSi(CH_2)$qfunctionalising molecule or (Coating)ZZ'Si$(CH_2)$qfunctionalising molecule.

An example of linker may be $EtOSi(Me)_2CH_2CH_2CH_2NH_2$ allowing to obtain coating-Si-O-Si$(Me)_2CH_2CH_2CH_2N$-functionalising molecule.

Among the functionalising molecules may be cited proteins, in particular such as enzymes, immunoglobulines, such as IgG, IgM, IgA, antibodies and antigens, peptides.

The material may present very interesting properties.

First of all it may be considered as a biomaterial as it may mimics biological membranes, in particular when grafted with phospholipids.

The functionalisation density may be very high, for example the mean distance between them may equal or less than 15 nm, in particular equal or less than 10 nm, and more particularly equal or less than around 8 nm. This density may be measured through fluorescence of grafted alexa.

Such a material, functionalised or not, may exhibit a very good neutral comportment, in particular a very low physical adsorption, in particular for proteins and/or lipids. The protein adsorption may be measured through the fluorescence technique (extrinsic label). The lipid adsorption of lipids may be confirmed through experiments with asolectine liposomes.

The good, even excellent, neutrality, in particular regarding the adsorption, more particularly protein and or lipid adsorption, leads to a lower need, in particular to no need at all, of "passivating" the material. This means that the need of blocking buffer is lower or even that there is no need at all. Thus the quantity and/or the number of steps involving blocking buffer is lowered or even null.

This very interesting, in particular when the material is used as a sensor, or biosensor, as this may increase sensitivity and/or lower its price of the final sensor and/or render its preparation much easier and/or eco-friendly.

Furthermore, the material may present a good hydrophilicity, for example determined with air captive bubble contact angle (140 to 180°).

The material, in particular when grafted with a grafting comprising hydrophilic and hydrophobic parts, may change its conformation, more specifically in order to contact the medium at its surface with the corresponding characteristic. Thus in case the medium at the surface is hydrophobic, the material would contact it with its hydrophobic part, and in case the medium at the surface is hydrophilic, the material would contact it with its hydrophilic part. This is shown by increase of captive bubble in water with time from 140 to 180° and by decrease of adsorption of avidine with time in the examples.

Such a change of conformation may lead to a better conservation and/or protection of the hydrophilic, in particular charged, and more particularly zwitterionic, part or group.

The material may be free of double bonds, in particular as the method to obtain it is quantitative regarding the hydrosililation of carbon-carbon double bond. This may lead to a better stability of the material, in particular concerning auto-oxydation.

Furthermore, grafted PAHS layer may present a thickness rather constant on all its surface, in particular when it is thin, such as less than 1000 nm, in particular less than 100 nm.

By "constant" may be meant the thickness varies less or equal to 25 %, in particular less or equal to 20 %, more particularly less or equal to 15 % relative to the mean thickness.

Furthermore, the material may be colorless. By "colorless" may be meant that no color can be seen by the eye. This may further be determined by visible adsorption spectroscopy.

When the grafting is done through several bonds with the polyhydrosiloxanes this may reinforce the stability and the tightness.

The stability and tightness may also be reinforced by crosslinking of the polyhydrosiloxane. A crosslinking may be done when water is present during the grafting.

The material may present regular distribution of grooves around 100 nm deep with a thick PAHS, in particular PMHS, layer, for example superior or equal to 1$\mu$m (for example as shown in figure 4 right).

It may present different depth depending on the initial thickness of PAHS, in particular PMHS, layer. For instance around 30 nm for initial PAHS, in particular PMHS, layer 100-200 nm. For very thin layer 10-20 nm the depth may tend to zero.

Following another of its aspects, the invention has for subject matter devices comprising the material.

The material can be used as a biomaterial, which means for example that this material can be used in the body. In particular the material may mimic biological membranes, for example when the grafting derives form fatty acid phosphocholine.

The material may be used for example in enzyme reactors, for example with the enzyme functionalized on the material. Immobilized enzyme reactors are attractive to the food and pharmaceutical industries.

The material may also be used in prosthesis, for example a material showing hydrophilic or avoiding protein adsorption comportment on the prosthesis surface.

For example a mammary or vascular prosthesis with hydrophilic layer coating hydrophobic silicone, or ocular lenses of silicone coated with a material of the invention avoiding protein adhesion.

The material may exhibit antibacterial properties, in particular when the grafted part comprises ammonium function(s).

The material may exhibit anti-adhesive properties, in particular when hydrophilic groups are present.

The material may be used in various types of devices, such as

- biosensors, for example functionalised with antibodies, enzyme or antigen,
- electric transducer, such as Quartz Cristal Microbalance (QCM), Ion Sensitive Field Effect Transistor (ISFET),
- acoustic transducer, such as Surface Acoustic Wave (SAW),
- optic transducer, such as Surface Plasmon Resonance (SPR),
- medical implant, for example by treating titanium surfaces, in particular in view of limiting the adhesivity,
- catheter, in particular the material may be treated for having antibacterial and anti-adhesive properties,
- diagnostic kits, such as biochips,
- materials for cell growing, and
- microfluidic devices.

Following another aspect, the invention has for subject matter a method for preparing a material comprising the following steps:

a) treating the support to obtain a layer having SiH function,
b) grafting the SiH obtained in step a) with an alkene and a catalyst for covalently bonding the alkene to the coating, said alkene being non-terminal and/or having an hydrophilic part,
c) recovering a material comprising a support coated with a chain covalently grafted with Si-C bonds.

The support may be treated in order to get a layer presenting SiH function.

Following a first embodiment, where the support is crystalline silicon, the layer presenting SiH functions is obtained through HF treatment of the silicon oxide layer.

Following a second embodiment, where the support is silicon elastomers, such as a polydialkylsiloxane, for example PDMS, the layer presenting SiH functions is obtained through:

- modification of the surface of the silicon elastomer by plasma treatment or
- modification of the surface of the silicon elastomer by exchange of monomers at the interface through dipping in a PAHS monomer, such as methyldiethoxysilane $HSi(CH_3)(OCH_2CH_3)_2$ and/or triethoxysilane $HSi(OCH_2CH_3)_3$ (TH).

These techniques are for example disclosed by Olander et al. in Biomacromolecules2003, 4, 145 and in Biomacromolecules 2002, 3, 505 and by Chen et al. in Biomaterials 2005, 26, 2391.

Following a third embodiment, the layer presenting SiH functions is obtained by coating the support with a polyhydrosiloxane.

In particular the coating of a support with a polyhydrosiloxane polymer is done by contacting said support with at least one silane monomer and at least a catalytic amount of an acid, thus forming a polyhydrosiloxane bonded with the support.

The method may thus comprise a step a) in which a polyhydrosiloxane is coated to a support.

Following one embodiment, the step a) may be done by a reaction between the monomers to provide the polyhydrosiloxane and between the monomers or the growing polyhydrosiloxane with the support. In other word, the polymerisation of monomers is concomitant with the bonding with the support.

In other words, a sol mixture of monomers is deposited on the support. The deposition may be performed through spin-coating.

Monomers may be chosen from dialcoxyalkylsilane, trialcoxysilane, tetraalcoxysilane and their mixtures. Alcoxy may be chosen from methoxy, ethoxy, propoxy, n-propoxy or i-propoxy, butoxy, n-butoxy, sec-butoxy or t-butoxy.

A mixture of dialcoxyalkylsilane ($HSiR(OR_a)_2$) and trialcoxysilane ($HSi(OR_b)_3$), in particular with R= Me, and $R_a$ and $R_b$ being Et may be used.

The ratio dialcoxyalkylsilane / trialcoxysilane may go from 1/100 to 100/1, more particularly from 5/95 to 95/5, even more particularly from 95/5 to 70/30. When both monomers are used, it leads to a crosslinked PMHS.

The PMAS film may be prepared at a temperature going from 10 to 35°C, in particular from 15 to 30°C, and more particularly from 20 to 25°C.

The PMAS coating may be realised by a sol gel polymerisation. In particular with a crosslinker, which may be a tetraalcoxysilicon or a trialcoxysilane.

The monomer mixture may also comprise an acid, more particularly a strong acid, such as HCl, $H_2SO_4$, $HNO_3$ or a superacid, in particular trifluoromethanesulfonic acid. The acid, such as strong acid or superacid may be added in a catalytic amount, for example from 0.1 to 1, in particular from 0.2 to 0.8 and more particularly from 0.3 to 0.7, and even more specifically around 0.5 mmol/mol of monomers.

This acid, in particular the superacid, may be added before the deposition of monomer the support. In particular the superacid is added from 10 to 60 min. before deposition. More specifically, before the deposition, the solution may be stirred.

The monomer may be in a solvent like an alcohol, such as ethanol. More particularly, the concentration of monomers may go from 0.1 to 10 M, in particular from 2 to 6 M, and even more specifically around 4 M. The 0.1 M concentration may correspond to a final thickness of 10 nm, in particular when done by spin-coating, more particularly at 4000 rpm.

The molar ratio alcohol/silicon may range from 0.25 to 2.5, in particular from 0.5 to 5 and more particularly around 1.

During the polymerisation water may be a reactant of the sol-gel process.

Water may be present, in particular at a ratio of 0.5 mol/mol or more with respect of SiOR groups.

A lower ratio can be used, in this case this may lead to incomplete hydrolysis of SiOR groups which remains in the material and incomplete polymerisation.

On the contrary, higher ratio than 0.5 mol/mol of water may not increase the degree of crosslinking but increases the kinetics of gel formation. The gel may always be highly crosslinked if the ratio is greater than 0.5.

The deposition of the monomers, in particular as a sol of monomers, may be done through spin-coating.

In some cases the support, for example on silicon wafers, may be activated according to Thami et al., J. Appl. Polym. Sci., 2007, 104, 1504-1516.

The support may be treated in order to avoid at best moisture before spin-coating.

After deposition, the coated support may be cured, in particular at a temperature of about 80 to 120°C, and more particularly at around 110°C.

Alternatively, the coating may be obtained through other methods such as photopolymerisation of PAHS pre-polymers comprising crosslinkable functions; copolymerisation reactions implying tris(pentafluorophenyl)borane as catalyst; physical adsorption of linear PAHS on surfaces, for example as oxides, metals or polymers; deposition of hydrogenosilanes precursors by CVD leading to PAHS polymers, which could lead to a monolayer very rich with SiOH functions.

The method comprises a step b) of grafting the coating.

The synthesis of mixed functionality onto SiH layer, and in particular PAHS polymer surfaces, can be achieved by cohydrosilylation of two or more type of alkene molecules.

The synthesis of such mixed alkenes directly on PAHS surfaces can be regarded as an attractive avenue with wide-ranging desired properties.

The alkene(s), in particular are such as disclosed above or are such that they allow to obtain the graft chain, could be in solution in an organic solvent such as toluene. The concentration may range from 5 to 50 mM, in particular from 10 to 35 mM.

The solution may thus comprise one alkene or several, such as two, three of four alkenes for grafting. When several alkenes are used they are in particular homogeneously distributed on the surface.

To this solution may be added a catalyst catalysing hydrosilylation on carbon-carbon double bonds, for example platinum based catalyst, such as Karstedt catalyst (platinum divinyltetramethyldisiloxan), Speier catalyst ($H_2PtCl_6$), $PtCl_4$, $PtCl_2$, Pt on carbon, $K_2PtCl_4$, $H_2Pt(OH)_6$, $Pt(acac)_2$, $Pt(cod)Cl_2$ (...) or palladium, rhodium, iron, nickel, cobalt and manganese based catalysts, for example as mentioned in a review in the Journal of organometallic chemistry library E. Lukevics, Z. V. belyakoua, M.G. Pomerantseva, M. G. Voronkov Vol. 5 p1-179, 1977.

The alkene solution may be deposited on the coating through dip-coating, drop deposition, spin-coating or immersion.

In the case of drop deposition droplets of alkenes may be deposited on the coating. The volume of the deposition may depend on the number of SiH functions available, and thus may depend of the volume of coating.

Typically four droplets of 5 $\mu$l may be deposited per $cm^2$ and this may be repeated at a period of 15 to 30 minutes until a ratio alkene/SiH group of around 0.2 to 5, more particularly of 0.5 to 3, and more particularly of around 1.5. XPS may be used to control the sample after and before reaction (as disclosed in examples).

The samples may be kept at a temperature of less than 35°C, in particular of less than 30°C, and more particularly of 25°C or less. The temperature may range from about 10°C or 15°C to 25°C.

The samples may be kept less than 15h, in particular less than 10h, more particularly less than 2h and even more particularly less than 1 h.

At least in some cases, a temperature of more than 30°C, in particular of around 40°C, in particular for a period

of several hours, such as 15h may lead to a layer of polymerised or aggregated alkenes which can be washed away by dipping with aqueous medium.

The alkene may also be deposited through immersion. In this case, the support may be dipped in a solution of alkene and catalyst, in particular as disclosed above.

The dipping may last for 0.1 to 2h, in particular from 0.5 to 1.5h, and more particularly around 1 h.

In order to remove molecules not bonded with the coating the grafted coated support may be rinsed successively in different toluene/chloroform solution from 100/0 to 0/100, in particular with a gap of 20 %. This procedure may avoid possible delaminating by osmotic shock.

The process may comprise a further step b') of functionalisation. This functionalisation may in particular use SiOH functions present on the polyhydrosiloxane coating.

For example the molecule to be functionalised may form a bond directly with SiOH or with a linker which may subsequently form a bond with SiOH, for example through a alcoxysilyl group.

An example may be a linker such as 3-(ethoxydimetylsilyl)propylamine. This linker may be reacted with a molecule to be functionalised to form an amide, for example with a succinimidyl ester of the molecule to functionalise such as AlexaFluor® 594.

The silylamide is then reacted with the grafted coated material, for example by dipping the material in a solution of the silylamide. This may be followed by rinsing for example with ethanol, drying and keeping overnight in a solvent, for example water, to remove every trace of physically adsorbed molecules.

The 3-(ethoxydimetylsilyl)propylamine may also react directly with the polysiloxane coating. The amino function is reacted subsequently with a succinimidyl ester molecule such as AlexaFluor® 594.

Among functionalisation may be cited the carbodiimide chemistry through glutaraldehyde linkage with the newly-formed surface amino groups which can be used as another pathway to functionalize the material with many biomolecules via amino group.

The compounds functionalized on the material may be such as disclosed above.

Following another aspect, the invention has for subject matter a material obtainable by the method here above disclosed.

The following examples are presented in order to illustrate the invention.

## EXAMPLES

*Chemicals*

Both precursors methyldiethoxysilane $HSi(CH_3)(OCH_2CH_3)_2$ (DH) and triethoxysilane $HSi(OCH_2CH_3)_3$ (TH) were purchased from ABCR (Karlsruhe, Germany) and used as received.

Water for substrate cleaning was obtained from a Milli-Q water purification apparatus (Millipore). Absolute ethanol for sol-gel synthesis was of synthesis grade purity.

The sol-gel catalyst trifluoromethanesulfonic acid or triflic acid $CF_3SO_3H$ was purchased from Aldrich.

Toluene for thin film hydrosilylation was distilled before use.

The platinum-divinyltetramethyldisiloxane complex in xylene (platinum concentration of about 0.1 M assuming 2.4% (w) Pt in xylene), also known as Karstedt's catalyst, was purchased from ABCR (PC072) or Aldrich (479519).
1,2-dilinoleoyl-sn-glycero-3-phosphorylcholine (18:2 Cis) (PL) was purchased from AvantiPolarLipids.
Other chemicals were used as received: 3-(ethoxydimethylsilyl)-propyl amine (Aldrich, 588857), Alexa Fluor® 594 succinimidyl ester (labelling kit A10239, InvitroGen), biotin-ethylenediamine hydrobromide (Sigma B9181).

*Substrate cleaning and activation*

Silicon wafers Si(100) (ACM, France) cut into square strips of $2 \times 2$ $cm^2$ or thin microscope glass slides (see below) were used as substrates for spin-coating deposition. The square was cut into four pieces of 1 $cm^2$ area for phospholipid reaction with PMHS layer.

To bond covalently the PMHS thin films to native oxide silica (thickness about 2 nm), the silicon wafers were first cleaned and activated using the previously described procedure with "piranha" solution $H_2SO_4/H_2O_2$-30%w (70/30 vol); 90°C; 30 min. (Thami, et al., J. Appl. Polym. Sci. 2007, 104, 1504-1516) (*Caution: piranha solution must be handled extremely carefully*).

For fluorescence adsorption measurements, the substrates were wafers or thin microscope glass slides (Menzel-Glazer, Germany) of $2.5 \times 6$ $cm^2$ submitted to the same treatment to bond PMHS.

However, for protein adsorption to glass (without subsequent PMHS bonding), the substrate was previously treated with sulfochromic acid and rinsed carefully right before adsorption experiment.

***PMHS film***

PMHS thin films were prepared at 22 ± 1 °C by sol—gel polymerisation of DH and TH as crosslinker.

DH/TH 95/5 (mol%) sol mixtures were deposited by spin-coating on freshly activated substrates according to the procedure (Thami, et al., Journal of Polymer Science Part a-Polymer Chemistry 2008, 46, 3546-3562 and Nasr, et al., J. Appl. Polym. Sci. 2009, 111, 2785-2797) summarized as follows.

Trifluoromethanesulfonic acid $CF_3SO_3H$ (1.0 M in absolute ethanol) was used as catalyst (0.5 mmol/mol of monomers).

The mixture of monomers (4.0 M in EtOH; molar ratio [EtOH]/[Si]=1) was polymerized with hydrolysis ratio h = [H2O]/[SiOEt]=0.5.

The content of trifluoromethanesulfonic acid was not higher than 0.05% to control the kinetics of gelation of the liquid mixture. The resulting clear sols were allowed to ageing for about 30 minutes with magnetic stirring before spin-coating deposition.

The freshly cleaned silicon wafer was purged (2 min) in the spin-coater (Spin150, SPS Europe) under a stream of nitrogen (2 L/min) to avoid air moisture.

For all samples, the speed of rotation was 4000 rpm (spin acceleration 2000 rpm/s) and the rotation time 30 s.

The samples were finally cured at 110°C in an oven for 15 minutes. This procedure gave layers of reproducible homogeneity and thickness as controlled by electron microscopy and infrared analysis.

Infra red spectrum of this PMHS film is shown on figure 1a (B) and the PMHS network obtained is schematised on figure 2.

The atomic composition of silicon, carbon, oxygen, phosphorus and nitrogen, as measured by XPS, of PMHS is shown on the table 1.

*Grafting PMHS with phospholipid to get PL-PMHS*

After spin-coating a *circa* 1μm thick PMHS layer onto pieces of oxidized silicon wafer, the hydrosilylation reaction between the dilonoleyl phospholipid and the PMHS SiH function was performed in air by casting solutions of phospholipid in the presence of Karstedt's catalyst.

The reaction was then carried out in air at two different temperatures, procedure (A) at 20°C and (B) at 40°C, before rinsing the sample to remove any physisorbed material and dried finally under a stream of nitrogen.

The phospholipid solutions were prepared as 20 mg in 1 mL of toluene (25.5 mM), with additional 2μL of the xylene solution of platinum divinyltetramethyldisiloxane complex.

To functionalize PMHS film (thickness ca. 1 μm or less, area 1 $cm^2$), droplets of phospholipid solution were deposited on PMHS by casting. Typically, four coalescing droplets of 5 μL were enough to cover the PMHS area of 1$cm^2$. Repetition occurred over 15 -30 min (total 100 μL/$cm^2$) till a final molar ratio of phospholipid in excess of 1.5 over hydrogenosilane group SiH present onto PMHS film.

After total evaporation of the toluene (ca. 15 min) at room temperature, the samples were kept for 15h (A) at 20°C or (B) placed in a thermostated box at 40°C.

The samples were then rinsed three times in 5 mL of dry toluene.

For kinetics experiments, one deposition of 25 μL drops was preferably chosen and rinsing with toluene occurred at various times of reaction of 10, 20, 30, 40 and 60 min.

In the first experiment at 10 min, the washing was done before the time of evaporation of the toluene (ca. 15 min) deposited by casting on the sample.

To remove any non-covalently bonded molecule in both procedures A and B the samples were immersed successively in different toluene/chloroform mixtures from 100% to 0% (vol.) toluene with a gap of 20%, to avoid possible delaminating by osmotic shock.

The samples were then dried in a stream of nitrogen for 5 minutes, immersed in water for two hours and dried. Transmission infrared (IR) absorption spectra of thin films before and after hydrosilylation were used to control the yield of reaction after solvent and water rinsing. Water drop or air captive bubble contact angle in water was finally measured to characterize the samples surface hydrophilicity.

Infra red spectra representing an unreacted PL (1,2-dilinoleoyl-sn-glycero-3-phosphocholine (18:2 Cis)) on silicon wafer (C), PMHS film (B) and PL-PMHS film (where PL is 1,2-dilinoleoyl-sn-glycero-3-phosphocholine (18:2 Cis)) (A) are shown on figure 1a, and more particularly, the carbon-carbon double bond zone is zoomed in figure 1 b.

This spectra show no carbon-carbon double bond remaining in PL-PMHS film. The network of the PL-PMHS layer is schematised on figure 3.

The following table 1 presents the atomic composition of silicon, carbon, oxygen, phosphorus and nitrogen, as measured by XPS, of PMHS and PL-PMHS layers, where PL is 1,2-dilinoleoyl-sn-glycero-3-phosphocholine (18:2 Cis), prepared at 40°C; 15h. The atomic percentage of phosphorus indicates in particular the high density of phosphorylcholine

head at the interface defined by the XPS photoelectron depth of 5-10 nm.

Table 1

| Films | Si (%) | C(%) | O (%) | P (%) | N (%) |
|---|---|---|---|---|---|
| *Theoretical bulk PMHS (95/5)* | *33.6* | *31.9* | *34.5* | | |
| Surface PMHS | 37.8 ± 0.9 | 30 ± 1 | 32.0 ± 0.5 | | |
| *Theoretical PL layer* ($C_{44}NO_8P$) | | *81.5* | *14.8* | *1.85* | *1.85* |
| Surface PL-PMHS | 9.5 ± 1.2 | 60.0 ± 0.9 | 27.7 ± 0.1 | 1.6±0.1 | 1.2±0.1 |
| *Theoretical PL-PMHS (z = 0.45)* $[(C_{44}NO_8P)_{1/4}(SiC_3O)]_z\,[SiC_3O_{1.5}]_{1-z}$ | *10.7* | *63.6* | *23.3* | *1.2* | *1.2* |

The figure 4 represents an air bubble in water contacting the PL-PMHS layer. This shows the hydrophilicity of the PL-PMHS layer when said layer is contacted by water.

The figure 5 illustrates the comportment of hydrophilic glass, PMHS material, PL-PMHS at t0 and PL-PMHS conditioned 15h in PBS buffer to protein (avidin) adsorption. This shows that PL-PMHS material is almost completely neutral to avidin adsorption.

The figure 7 illustrates the absence of adsorption of bovine serum albumin (BSA), α-chymotrypsin and cytochrome-C on PL-PMHS material by successive flows of protein solutions (isoelectricpoints from 5.6 to 10.3) and buffer (PBS pH 7.4). Front face (y about 66μm) is PL-PMHS : no adsorption peak. The fluorescence level of solution through slit half-width is represented.

Alternatively, the phospholipid sample can also be prepared by immersing the PMHS samples (thickness ca. 1 μm or less from 10 nm to 150 nm, area 1 $cm^2$) into solution of phospholips (2.5 mg/mL) and with additional 1μL of the xylene solution of platinum divinyltetramethyldisiloxane complex catalyst for one hour or several hour typically 15h. The ratio of phospholipid/SiH (mol/mol) was in excess of 1.5 or more. The samples were then rinsed successively in different toluene/chloroform mixtures from 100/0 to 0/100 (% vol.) and dried under a stream of Argon.

*Synthesis of monoethoxysilane bearing Alexa and Grafting on PL-PMHS*

Synthesis of monoethoxysilane bearing Alexa

To a solution of Alexa Fluor® 594 succinimidyl ester (12.2 nmol) in dry ethanol (100 μL) under argon atmosphere, was added 3-(ethoxydimethylsilyl)-propyl amine (12.2 nmol).

The reaction mixture was vigorously stirred for two hours at room temperature.

The resulted mixture was then divided into ten parts.

The solvent was evaporated under reduced pressure and the product alexa-monoethoxysilane thus obtained was used without further purification.

HRMS (Q-Tof) : Calcd for $C_{35}H_{35}N_3O_{10}S_2$ 721.1745 ($M^-$ - C4H11 SiO);
Found: 721.1764.

*PL-PMHS Functionalisation*

a) A first way to functionnalise PL-PMHS material

Each part of the divided alexa-monoethoxysilane (~ 1 nmol) was dissolved in a mixture of toluene/dry ethanol (700μL/300μL).

The PL-PMHS coated surfaces were then soaked in the solution for one hour.

The substrates were further rinsed with ethanol, dried under a stream of argon, then kept overnight in Milli-Q water in order to remove any trace of physically adsorbed alexa before characterisation by confocal microscopy.

b) A Second way to functionnalise PL-PMHS material

In a first step, the substrate is immersed in mixture of 3-(ethoxydimethylsilyl)-propyl amine in toluene (10 % v: v) at room temperature for 3h. The substrates were further rinsed with toluene, dried under a stream of argon. In a second step, the substrate in then dipped in a solution of Alexa Fluor® 594 succinimidyl ester (about 1 nmol) in dry ethanol (1000 μL) under argon atmosphere for 1 h. The substrates were further rinsed with Ethanol, water, and dried under a stream of argon.

The figure 6 represents schematically the two ways to functionalise the PL-PMHS layer.
Furthermore, these two ways to functionalised PL-PMHS material allowed to obtain a mean degree of functionalization of $3.0 \times 10^{-2}$ $nm^{-2}$, and a mean distance between the sites of 5.7 nm as measured by fluorescence.
The following analysis were used in this example.

*Infrared (IR) analysis*

Transmission IR absorption spectra of films were recorded using a Nicolet Nexus FTIR spectrometer in the 4000-400 $cm^{-1}$ range with 64 scans and 4 $cm^{-1}$ resolution. A background spectrum was recorded using a piece of bare unmodified silicon wafer in air.

*X-ray photoelectron spectroscopy (XPS)*

The surface elemental composition of PMHS and PL-PMHS surfaces were analysed by XPS. The spectra were obtained by means of a spectrophotometer (ESCALAB 250, Thermo Electron, UK) equipped with a monochromatic Al $K\alpha$ (1486.6 eV) radiation source. The acceleration tension and power of X-ray source were 15 kV and 100 W, respectively. The samples were analysed in the $10^{-9}$ mbar range of pressure. The electron take-off angle with respect to the sample surface was maintained at 90° and the analysed spot size was approximately 400 $\mu m^2$. The composition corresponds to depths of 5-10 nm at normal incidence of the photoelectrons with respect to the surface.

*Captive bubble angle in water*

Air captive bubble contact angles in water were measured (GBX - Digidrop, Romans, France) by applying air bubble of about 25 $\mu$L to the surface.

*Adsorption: Determination of interfacial concentration*

The experiments were performed at T = 19°C in a slit flow cell of thickness 63 $\mu$m and flow rate corresponding to wall shear rate 1000 $s^{-1}$. Confocal measurements were performed at 2 cm from the slit entrance. Interfacial concentration was evaluated as follows:

the fluorescence signal $F_{sol}$ from solution at concentration C is relative to an effective volume V while the signal $F_{surf}$ at the surface concerns interfacial concentration $\Gamma$ over area A.

$$F_{surf} \propto \Gamma A \text{ and } F_{sol} \propto C V \text{ therefore } \Gamma = (V/A) (F_{surf}/ F_{sol}) C.$$

## Claims

1. Method for preparing a material comprising the following steps:

    a) treating the support to obtain a layer having SiH function,
    b) grafting the SiH layer obtained in step a) with an alkene and a catalyst for covalently bonding the alkene to the coating, said alkene being non-terminal and/or having an hydrophilic part,
    c) recovering a material comprising a support coated with a chain covalently grafted with Si-C bonds.

2. Method according to claim 1, **characterized in that** the step a) comprises

    - a polyhydrosiloxane coating of the support, in particular through deposition of a sol mixture of monomer(s) to the support,
    - an HF treatment of the silicon oxide layer from a crystalline support,
    - a modification of the surface of a silicon elastomer support by plasma treatment, or
    - a modification of the surface of a silicon elastomer support by exchange of monomers at the interface through dipping in a PAHS monomer.

3. Method according to claim 2, **characterized in that** the monomers are chosen from dialcoxyalkylsilane, trialcoxysilane, tetraalcoxysilane and their mixtures, in particular wherein alcoxy are chosen from methoxy, ethoxy, propoxy, n-propoxy or i-propoxy, butoxy, n-butoxy, sec-butoxy or t-butoxy, more particularly from methyldiethoxysilane HSi$(CH_3)(OCH_2CH_3)_2$ and/or triethoxysilane $HSi(OCH_2CH_3)_3$ .

**4.** Method according to any of claims 1 to 3, **characterized in that** the alkene presents a hydrophilic part, in particular the hydrophilic part is bearing polar function(s), such as ammonium, phosphates, alcohols, thiols, sulfonates, carboxylic acids, and more particularly zwitterionic species such as phosphoammoniums, sulfobetaine and carboxybetaine.

**5.** Method according to any of claims 1 to 4, **characterized in that** the alkene is a phospholipid with unsaturated fatty acid part(s).

**6.** Method according to any of claims 1 to 5, **characterized in that** the alkene is chosen from:

- L-alpha-phosphatidylcholine (Egg), CAS number 97281-44-2, commercially available by Avanti, number 840051,
- Lecithin (Egg), CAS number 97281-47-5, commercially available by Avanti, number 131601,
- L-alpha-phosphatidylcholine (Soy), CAS number 97281-47-5, commercially available by Avanti, number 840054,
- Lecithin (Soy), commercially available by Avanti, number 441601,
- L-alpha-phosphatidylcholine (Heart), commercially available by Avanti, number 840052,
- L-alpha-phosphatidylcholine (Brain), CAS number 383907-52-6, commercially available by Avanti, number 840053,
- L-alpha-phosphatidylcholine (Liver), CAS number 475662-36-3, commercially available by Avanti, number 850346,
- 1,2-di-(9Z-tetradecenoyl)-sn-glycero-3-phosphocholine,
- 1,2-di-(9E-tetradecenoyl)-sn-glycero-3-phosphocholine,
- 1,2-di-(9Z-hexadecenoyl)-sn-glycero-3-phosphocholine,
- 1,2-di-(9E-hexadecenoyl)-sn-glycero-3-phosphocholine,
- 1,2-di-(6Z-octadecenoyl)-sn-glycero-3-phosphocholine,
- 1,2-di-(9Z-octadecenoyl)-sn-glycero-3-phosphocholine,
- 1,2-di-(9E-octadecenoyl)-sn-glycero-3-phosphocholine,
- 1,2-di-(9Z,12Z-octadecadienoyl)-sn-glycero-3-phosphocholine,
- 1,2-di-(9Z,12Z,15Z-octadecatrienoyl)-sn-glycero-3-phosphocholine,
- 1,2-di-(11Z-eicosenoyl)-sn-glycero-3-phosphocholine,
- 1,2-di-(5Z,8Z,11Z,14Z-eicosatetraenoyl)-sn-glycero-3-phosphocholine,
- 1,2-di-(13Z-docosenoyl)-sn-glycero-3-phosphocholine,
- 1,2-di-(4Z,7Z,10Z,13Z,16Z,19Z-docosahexaenoyl)-sn-glycero-3-phosphocholine,
- 1,2-di-(15Z-tetracosenoyl)-sn-glycero-3-phosphocholine,
- 1-hexadecanoyl-2-(9Z-octadecenoyl)-sn-glycero-3-phosphocholine,
- 1-hexadecanoyl-2-(9Z,12Z-octadecadienoyl)-sn-glycero-3-phosphocholine,
- 1-hexadecanoyl-2-(5Z,8Z,11Z,14Z-eicosatetraenoyl)-sn-glycero-3-phosphocholine,
- 1-hexadecanoyl-2-(4Z,7Z,10Z,13Z,16Z,19Z-docosahexaenoyl)-sn-glycero-3-phosphocholine,
- 1-octadecanoyl-2-(9Z-octadecenoyl)-sn-glycero-3-phosphocholine,
- 1-octadecanoyl-2-(9Z,12Z-octadecadienoyl)-sn-glycero-3-phosphocholine,
- 1-octadecanoyl-2-(5Z,8Z,11Z,14Z-eicosatetraenoyl)-sn-glycero-3-phosphocholine,
- 1-octadecanoyl-2-(4Z,7Z,10Z,13Z,16Z,19Z-docosahexaenoyl)-sn-glycero-3-phosphocholine,
- 1-(9Z-octadecenoyl)-2-tetradecanoyl-sn-glycero-3-phosphocholine,
- 1-(9Z-octadecenoyl)-2-hexadecanoyl-sn-glycero-3-phosphocholine,
- 1-(9Z-octadecenoyl)-2-octadecanoyl-sn-glycero-3-phosphocholine,
- Lysophosphatidylcholine (Soy), CAS number 97281-38-4, commercially available by Avanti, number 840072,
- 1-(9Z-octadecenoyl)-sn-glycero-3-phosphocholine,
- Cardiolipin (Heart), CAS number 383907-10-6, commercially available by Avanti, number 840012,
- Cardiolipin (E. coli), CAS number 796964-05-1, commercially available by Avanti, number 841199,
- 1',3'-bis[1,2-di-(9Z-octadecenoyl)-sn-glycero-3-phospho]-sn-glycerol,
- Monolysocardiolipin (Heart), commercially available by Avanti, number 840081,
- Dilysocardiolipin (Heart), commercially available by Avanti, number 850082,
- bis(monooleoylglycero)phosphate (S,R isomer),

- bis(monooleoylglycero)phosphate (S,S isomer),
- bis(monooleoylglycero)phosphate (R,R isomer),
- bis(diooleoylglycero)phosphate (S,S isomer),
- sn-(3-oleoyl-2-hydroxy)-glycerol-1-phospho-sn-3'-(1',2'-dioleoyl)-glycerol,
- 1,2-di-O-octadecenyl-sn-glycero-3-phosphocholine,
- 1-(1Z-octadecenyl)-2-(9Z-octadecenoyl)-sn-glycero-3-phosphocholine,
- 1 -(1 Z-octadecenyl)-2-(5Z,8Z,11Z,14Z-eicosatetraenoyl)-sn-glycero-3-phosphocholine,
- 1-(1Z-octadecenyl)-2-(4Z,7Z,10Z,13Z,16Z,19Z-docosahexaenoyl)-sn-glycero-3-phosphocholine,
- 1-O-1'(Z)-octadecenyl)-2-hydroxy-sn-glycero-3-phosphocholine,
- 1-(1Z-octadecenyl)-2-(9Z-octadecenoyl)-sn-glycero-3-phosphoethanolamine,
- 1-(1Z-octadecenyl)-2-(5Z,8Z,11Z,14Z-eicosatetraenoyl)-sn-glycero-3-phosphoethanolamine,
- 1-(1Z-octadecenyl)-2-(4Z,7Z,10Z,13Z,16Z,19Z-docosahexaenoyl)-sn-glycero-3-phosphoethanolamine,
- 1-palmitoyl-2-cholesterylhemisuccinoyl-sn-glycero-3-phospshocholine,
- 1-oeloyl-2-cholesterylhemisuccinoyl-sn-glycero-3-phospshocholine,
- 1-palmitoyl-2-cholesterylcarbonoyl-sn-glycero-3-phospshocholine,
- 1,2-dicholesterylhemisuccinoyl-sn-glycero-3-phospshocholine,
- L-alpha-phosphatidylinositol (Liver), CAS number 383907-33-3 commercially available by Avanti, number 840042,
- L-alpha-phosphatidylinositol (Soy), CAS number 383907-36-6, commercially available by Avanti, number 840044,
- L-alpha-phosphatidylinositol PI(4)P (Brain), CAS number 475995-51-8, commercially available by Avanti, number 840045,
- L-alpha-phosphatidylinositol PI(4,5)$P_2$ (Brain), CAS number 383907-42-4, commercially available by Avanti, number 840046,
- 1,2-di-(9Z-octadecenoyl)-sn-glycero-3-phospho-(1'-myo-inositol),
- 1,2-di-(9Z-octadecenoyl)-sn-glycero-3-phospho-(1'-myo-inositol-3'-phosphate),
- 1,2-di-(9Z-octadecenoyl)-sn-glycero-3-phospho-(1'-myo-inositol-5'-phosphate),
- 1,2-di-(9Z-octadecenoyl)-sn-glycero-3-phospho-(1'-myo-inositol-3',4'-bisphosphate),
- 1,2-di-(9Z-octadecenoyl)-sn-glycero-3-phospho-(l'-myo-inositol-3',5'-bisphosphate),
- 1,2-di-(9Z-octadecenoyl)-sn-glycero-3-phospho-(l'-myo-inosito1-4',5'-bisphosphate),
- 1,2-di-(9Z-octadecenoyl)-sn-glycero-3-phospho-(1'-myo-inositol-3',4',5'-trisphosphate),
- 1-octadecanoyl-2-(5Z,8Z,11Z,14Z-eicosatetraenoyl)-sn-glycero-3-phospho-(1'-myo-inositol-3',5'-bisphosphate),
- 1-octadecanoyl-2-(5Z,8Z,11Z,14Z-eicosatetraenoyl)-sn-glycero-3-phospho-(1'-myo-inositol-4',5'-bisphosphate),
- 1-octadecanoyl-2-(5Z,8Z,11Z,14Z-eicosatetraenoyl)-sn-glycero-3-phospho-(1'-myo-inositol-3',4',5'-trisphosphate),
- 1-(9Z-octadecenoyl)-2hydroxy)-sn-glycero-3-phospho-(1'-myo-inositol),
- L-alpha-Phosphatidylserine (Brain), CAS number 383907-32-2, commercially available by Avanti, number 840032,
- L-alpha-Phosphatidylserine (Soy), CAS number 383908-63-2, commercially available by Avanti, number 840036,
- 1,2-di-(9Z-octadecenoyl)-sn-glycero-3-phospho-L-serine,
- 1,2-di-(9Z,12Z-octadecadienoyl)-sn-glycero-3-phospho-L-serine,
- 1,2-di-(5Z,8Z,11Z,14Z-eicosatetraenoyl)-sn-glycero-3-phospho-L-serine,
- 1,2-di-(4Z,7Z,10Z,13Z,16Z,19Z-docosahexaenoyl)-sn-glycero-3-phospho-L-serine,
- 1-hexadecanoyl-2-(9Z-octadecenoyl)-sn-glycero-3-phospho-L-serine,
- 1-hexadecanoyl-2-(9Z,12Z-octadecadienoyl)-sn-glycero-3-phospho-L-serine,
- 1-hexadecanoyl-2-(5Z,8Z,11Z,14Z-eicosatetraenoyl)-sn-glycero-3-phospho-L-serine,
- 1-hexadecanoyl-2-(4Z,7Z,10Z,13Z,16Z,19Z-docosahexaenoyl)-sn-glycero-3-phospho-L-serine,
- 1-octadecanoyl-2-(9Z-octadecenoyl)-sn-glycero-3-phospho-L-serine,
- 1-octadecanoyl-2-(9Z,12Z-octadecadienoyl)-sn-glycero-3-phospho-L-serine,
- 1-octadecanoyl-2-(5Z,8Z,11Z,14Z-eicosatetraenoyl)-sn-glycero-3-phospho-L-serine,
- 1-octadecanoyl-2-(4Z,7Z,10Z,13Z,16Z,19Z-docosahexaenoyl)-sn-glycero-3-phospho-L-serine,
- 1-9Z-octadecenoyl-sn-glycero-3-phospho-L-serine,
- L-alpha-phosphatidylglycerol (Egg),,CAS number 383907-64-0, commercially available by Avanti, number 841138,
- L-alpha-phosphatidyl-DL-glycerol (Soy), commercially available by Avanti, number 841148,

- 1,2-di-(9Z-octadecenoyl)-sn-glycero-3-phospho-(1'-rac-glycerol),
- 1,2-di-(9E-octadecenoyl)-sn-glycero-3-phospho-(1'-rac-glycerol),
- 1,2-di-(9Z,12Z-octadecadienoyl)-sn-glycero-3-phospho-(1'-rac-glycerol),
- 1,2-di-(9Z,12Z,15Z-octadecatrienoyl)-sn-glycero-3-phospho-(1'-rac-glycerol),
- 1,2-di-(5Z,8Z,11Z,14Z-eicosatetraenoyl)-sn-glycero-3-phospho-(1'-rac-glycerol),
- 1,2-di-(4Z,7Z,10Z,13Z,16Z,19Z-docosahexaenoyl)-sn-glycero-3-phospho-(1'-rac-glycerol),
- 1-hexadecanoyl-2-(9Z-octadecenoyl)-sn-glycero-3-phospho-(1'-rac-glycerol),
- 1-hexadecanoyl-2-(9Z,12Z-octadecadienoyl)-sn-glycero-3-phospho-(1'-rac-glycerol),
- 1-hexadecanoyl-2-(5Z,8Z,11Z,14Z-eicosatetraenoyl)-sn-glycero-3-phospho-(1'-rac-glycerol),
- 1-hexadecanoyl-2-(4Z,7Z,10Z,13Z,16Z,19Z-docosahexaenoyl)-sn-glycero-3-phospho-(1'-rac-glycerol),
- 1-octadecanoyl-2-(9Z-octadecenoyl)-sn-glycero-3-phospho-(1'-rac-glycerol),
- 1-octadecanoyl-2-(9Z,12Z-octadecadienoyl)-sn-glycero-3-phospho-(1'-rac-glycerol),
- 1-octadecanoyl-2-(5Z,8Z,11Z,14Z-eicosatetraenoyl)-sn-glycero-3-phospho-(1'-rac-glycerol),
- 1-octadecanoyl-2-(4Z,7Z,10Z,13Z,16Z,19Z-docosahexaenoyl)-sn-glycero-3-phospho-(1'-rac-glycerol),
- 1-(9Z-octadecenoyl)-sn-glycero-3-phospho-(1'-rac-glycerol),
- L-alpha-phosphatidyl-ethanolamine (Egg), commercially available by Avanti, number 840021,
- L-alpha-phosphatidyl-ethanolamine transphosphatidylated (Prepared from Egg PC), commercially available by Avanti, number 841118, CAS number 383907-63-9,
- L-alpha-phosphatidyl-ethanolamine (Heart), commercially available by Avanti, number 840025, CAS number 477241-93-3,
- L-alpha-phosphatidyl-ethanolamine (Brain), commercially available by Avanti, number 840022, CAS number 383907-18-4,
- L-alpha-phosphatidyl-ethanolamine (Liver), commercially available by Avanti, number 840026, CAS number 383907-31-1,
- L-alpha-phosphatidyl-ethanolamine (Soy), commercially available by Avanti, number 840024, CAS number 97281-51-1,
- L-alpha-phosphatidyl-ethanolamine (E. coli), CAS number 94581-14-3, commercially available by Avanti, number 840027,
- 1,2-di-(9Z-hexadecenoyl)-sn-glycero-3-phosphoethanolamine,
- 1,2-di-(9Z-octadecenoyl)-sn-glycero-3-phosphoethanolamine,
- 1,2-di-(9E-octadecenoyl)-sn-glycero-3-phosphoethanolamine,
- 1,2-di-(9Z,12Z-octadecadienoyl)-sn-glycero-3-phosphoethanolamine,
- 1,2-di-(9Z,12Z,15Z-octadecatrienoyl)-sn-glycero-3-phosphoethanolamine,
- 1,2-di-(5Z,8Z,11Z,14Z-eicosatetraenoyl)-sn-glycero-3-phosphoethanolamine,
- 1,2-di-(4Z,7Z, 10Z, 13Z, 16Z, 19Z-docosahexaenoyl)-sn-glycero-3-phosphoethanolamine,
- 1-hexadecanoyl-2-(9Z-octadecenoyl)-sn-glycero-3-phosphoethanolamine,
- 1-hexadecanoyl-2-(9Z,12Z-octadecadienoyl)-sn-glycero-3-phosphoethanolamine,
- 1-hexadecanoyl-2-(5Z,8Z,11Z,14Z-eicosatetraenoyl)-sn-glycero-3-phosphoethanolamine,
- 1-hexadecanoyl-2-(4Z,7Z,10Z,13Z,16Z,19Z-docosahexaenoyl)-sn-glycero-3-phosphoethanolamine,
- 1-octadecanoyl-2-(9Z-octadecenoyl)-sn-glycero-3-phosphoethanolamine,
- 1-octadecanoyl-2-(9Z,12Z-octadecadienoyl)-sn-glycero-3-phosphoethanolamine,
- 1-octadecanoyl-2-(5Z,8Z,11Z,14Z-eicosatetraenoyl)-sn-glycero-3-phosphoethanolamine,
- 1-octadecanoyl-2-(4Z,7Z,10Z,13Z,16Z,19Z-docosahexaenoyl)-sn-glycero-3-phosphoethanolamine,
- Lysophosphoethanolamine plasmanogen (Brain), commercially available by Avanti, number 850095,
- 1-(9Z-octadecenoyl)-sn-glycero-3-phosphoethanolamine,
- L-alpha-phosphatidic acid (Egg), CAS number 383906-53-7, commercially available by Avanti, number 840101,
- L-alpha-phosphatidic acid (Soy), CAS number 475995-54-1, commercially available by Avanti, number 840074,
- 1,2-di-(9Z-octadecenoyl)-sn-glycero-3-phosphate,
- 1,2-di-(9Z,12Z-octadecadienoyl)-sn-glycero-3-phosphate,
- 1,2-di-(5Z,8Z,11Z,14Z-eicosatetraenoyl)-sn-glycero-3-phosphate,
- 1,2-di-(4Z,7Z,10Z,13Z,16Z,19Z-docosahexaenoyl)-sn-glycero-3-phosphate,
- 1-hexadecanoyl-2-(9Z-octadecenoyl)-sn-glycero-3-phosphate,
- 1-hexadecanoyl-2-(9Z,12Z-octadecadienoyl)-sn-glycero-3-phosphate,
- 1-hexadecanoyl-2-(5Z,8Z,11Z,14Z-eicosatetraenoyl)-sn-glycero-3-phosphate,
- 1-hexadecanoyl-2-(4Z,7Z,10Z,13Z,16Z,19Z-docosahexaenoyl)-sn-glycero-3-phosphate,
- 1-octadecanoyl-2-(9Z-octadecenoyl)-sn-glycero-3-phosphate,
- 1-octadecanoyl-2-(9Z,12Z-octadecadienoyl)-sn-glycero-3-phosphate,
- 1-octadecanoyl-2-(5Z,8Z,11Z,14Z-eicosatetraenoyl)-sn-glycero-3-phosphate,

- 1-octadecanoyl-2-(4Z,7Z,10Z,13Z,16Z,19Z-docosahexaenoyl)-sn-glycero-3-phosphate,
- 1-(9Z-octadecenoyl)-sn-glycero-3-phosphate,
- 1-(5Z,8Z,11Z,14Z-ei cosatetraenoyl)-sn-glycero-3-phosphate,
- 1-(9Z-octadecenyl)-sn-glycero-3-phosphate,
- 1-(9Z-octadecenoyl)-sn-glycero-2,3-cyclic-phosphate,
- 1-(9Z-octadecenyl)-sn-glycero-2,3-cyclic-phosphate,
- 1-(9Z-octadecenoyl)-2-methyl-sn-glycero-3-phosphothionate,
- 1,2-dilinoleoyl-sn-glycero-3-phosphocholine (18:2 cis),
- 1,2-dioleoyl-sn-glycero-3-phosphocholine (DOPC),
- 1,2-dilinolenoyl-sn-glycero-3-phosphocholine,
- 1-stearoyl-2-oleoyl-sn-Glycero-3-phosphorylcholine,
- 1-stearoyl-2-linoleoyl-sn-Glycero-3-phosphorylcholine,

their mixtures and their salts, in particular sodium and ammonium.

7. Method according to any of claims 1 to 6, **characterized in that** it further comprises a step b') of functionalisation of the SiH layer, in particular through SiOH from the SiH layer, such as the PAHS coating, said functionalisation being done with proteins, in particular such as enzymes, immunoglobulines, such as IgG, IgM, IgA, antibodies, antigens, peptides, for example RGD sequence.

8. Material comprising a support, optionally comprising a polyhydrosiloxane layer, on which surface is covalently bonded a grafted chain, wherein:

   - the covalent bonding between the support and/or the polyhydrosiloxane and the chain is an Si-C bond, and
   - the grafted chain is bonded through a non-terminal carbon, through more than one covalent bond and/or the chain is having at least one hydrophilic part.

9. Material according to claim 8, **characterised in that**:

   - the support, in particular crystalline silicone or silicon elastomers, exhibits on its surface a layer covalently bonded to the grafted chain, or
   - the support is coated with a polyhydrosiloxane.

10. Material according to claim 8 or 9, **characterised in that** the grafted chain comprises a polyether part, such as PEG or PPG.

11. Material according to claim 9, **characterised in that** the grafted chain

   - is covalently bonded to silicon from the polyhydrosiloxane through a carbon which is not a terminal carbon,
   - is covalently bonded to the polyhydrosiloxane through at least two, in particular two, three or four, carbon-silane covalent bonds, and/or
   - comprises a hydrophilic part, in particular the hydrophilic part is bearing polar function(s), such as ammonium, phosphates, alcohols, thiols, sulfonates, carboxylic acids, and more particularly zwitterionic species such as phosphoammoniums, sulfobetaine and carboxybetaine.

12. Material according to any of claims 8 to 11, **characterised in that** it further comprises a functionalised part, for example proteins, in particular such as enzymes, immunoglobulines, such as IgG, IgM, IgA, antibodies and antigens, peptides, more particularly through a linker.

13. Material according to any of claims 8 to 12, **characterised in that** the mean distance between functionalisation may equal or less than 15 nm, in particular equal or less than 10 nm, and more particularly equal or less than around 8 nm.

14. Material according to any of claims 8 to 13, **characterised in** the grafted PAHS changes its conformation depending on the medium contacting it.

15. Device comprising a material as disclosed in any of claims 8 to 14 or obtained by any of claims 1 to 7.

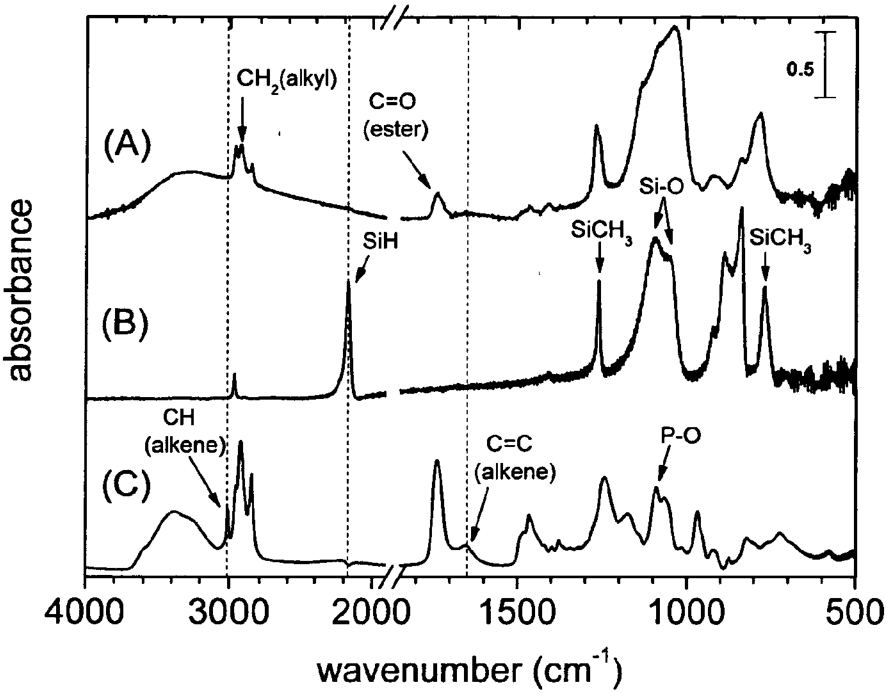


**Figure 1a**

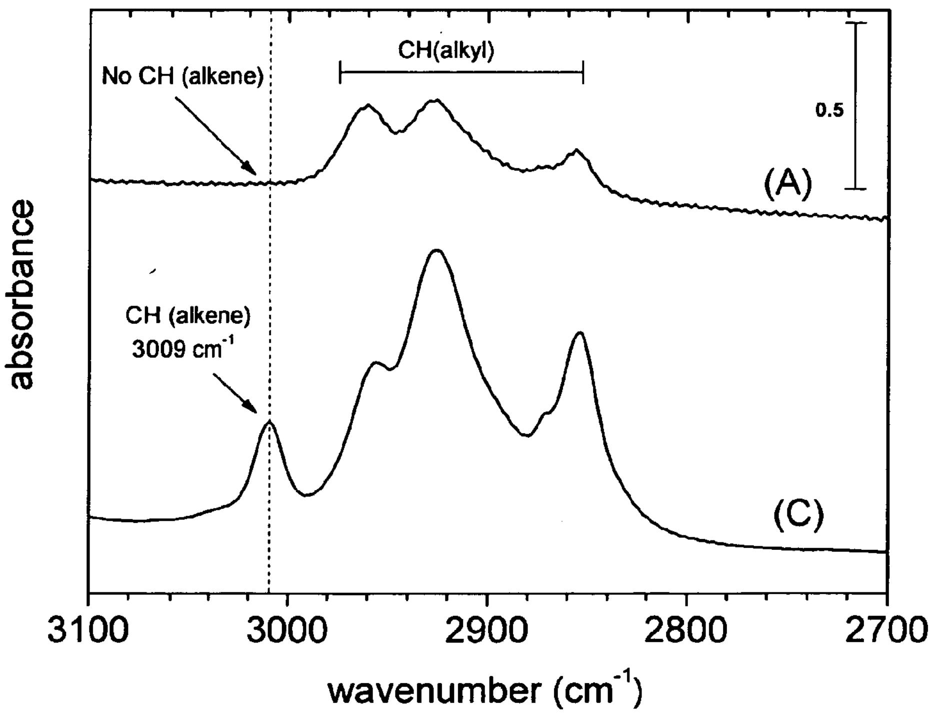


**Figure 1b**

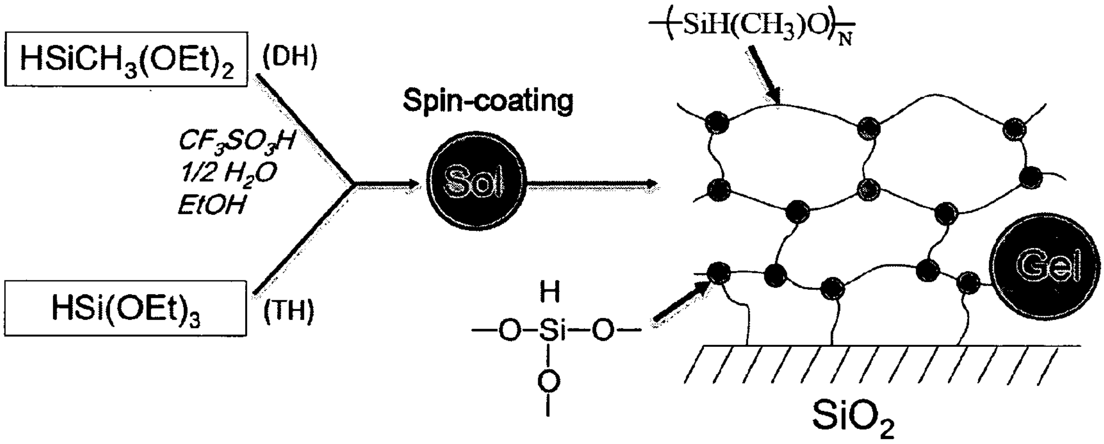


**Figure 2**

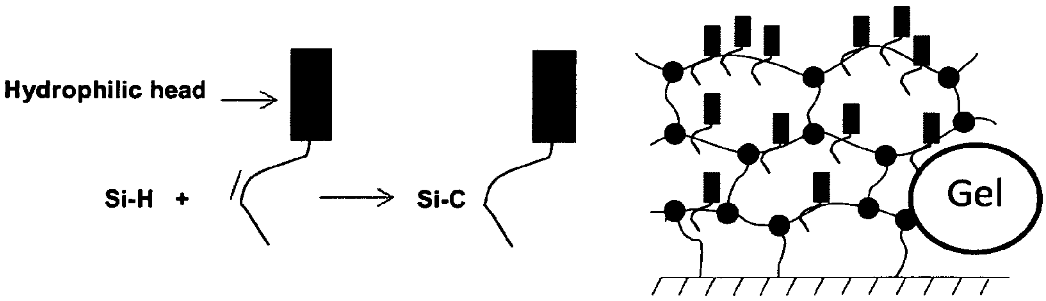


**Figure 3**

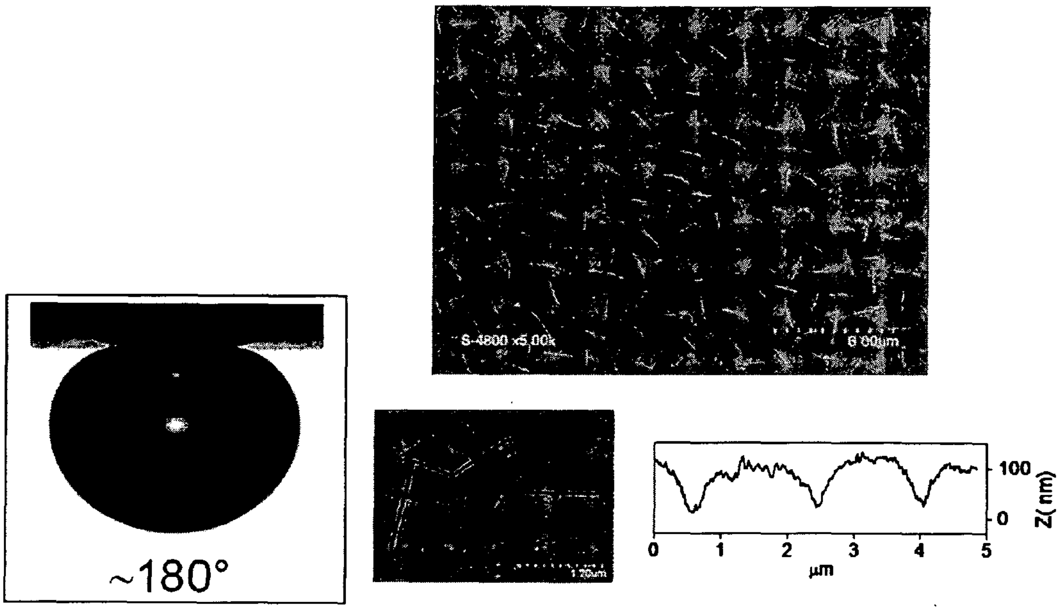


Figure 4

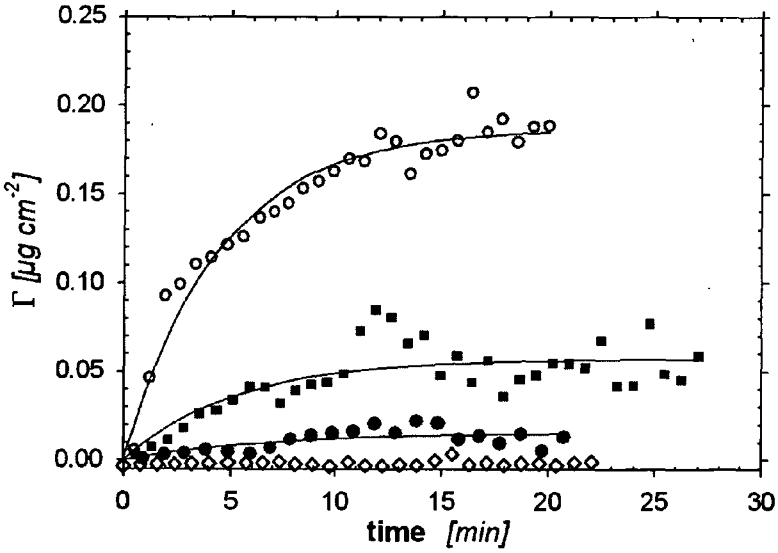


(o)hydrophilic glass, (■) PMHS, (•) PL-PMHS "t=0" and
(◇) PL-PMHS t=15h in buffer

Figure 5

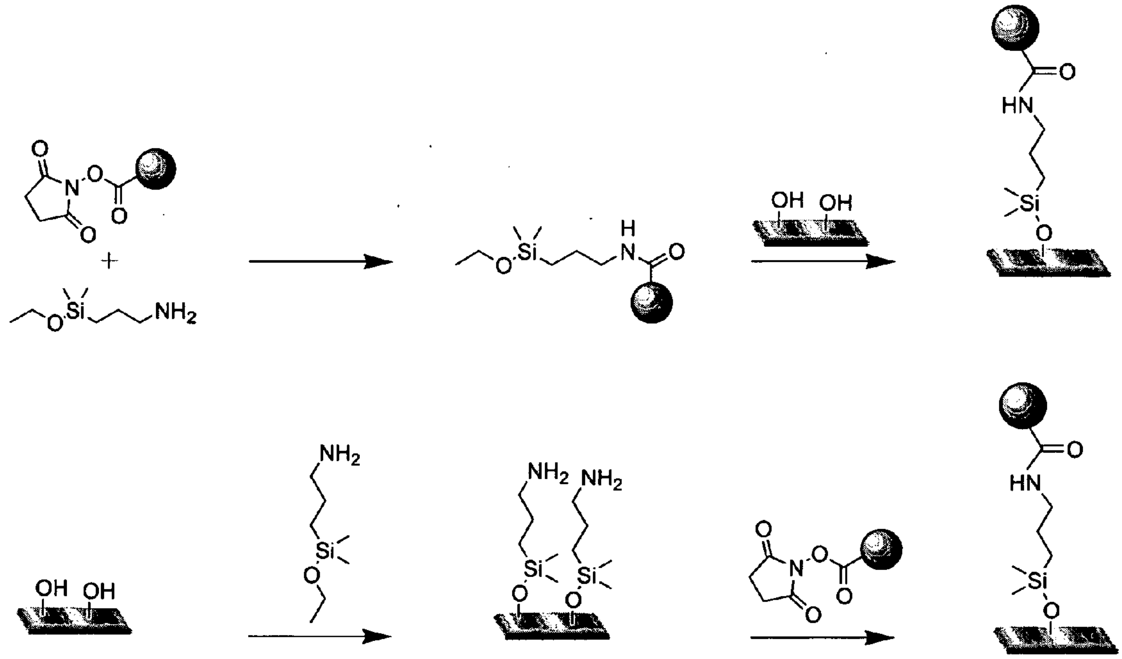

**Figure 6**

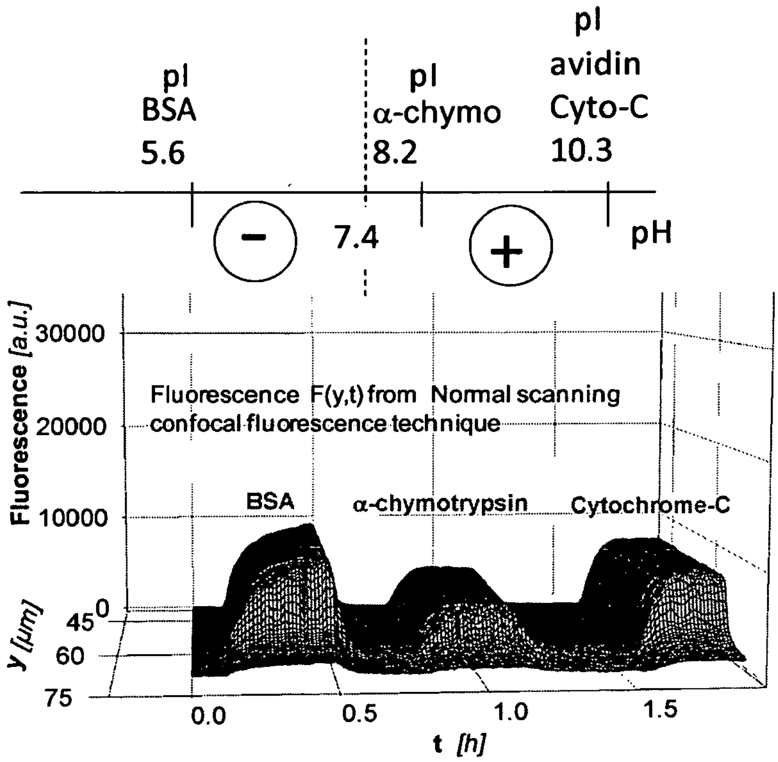


$C_b$ = 150 nM, PBS pH 7.4

**Figure 7**

Europäisches Patentamt
European Patent Office
Office européen des brevets

# EUROPEAN SEARCH REPORT

Application Number
EP 10 30 6146

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | OLANDER B ET AL: "Silicone elastomer surface functionalized with primary amines and subsequently coupled with heparin", BIOMACROMOLECULES, vol. 4, no. 1, January 2003 (2003-01), pages 145-148, XP002630343, ISSN: 1525-7797, DOI: 10.1021/BM025654+ * pages 145-147 * ----- | 1-15 | INV. C09D183/08 C12Q1/00 |
| X | NASR G ET AL: "Functionlizatioin of polymethylhydrosiloxane gels with an allyl ureido benzocrown ether derivative :Complexatioe properties", 2009, JOURNAL OF APPLIED POLYMER SCIENCE 2009 JOHN WILEY AND SONS INC. US, VOL. 111, NR. 6, PAGE(S) 2785 - 2797, XP002630344, * page 2785 - page 2788 * ----- | 1-15 | |
| X | US 2007/023627 A1 (FINCH JEFFREY [US] ET AL FINCH JEFFREY W [US] ET AL) 1 February 2007 (2007-02-01) * paragraphs [0001], [0003], [0016] - [0025], [0046], [0050] - [0059], [0070] - [0072], [0078] - [0099], [0113] * ----- | 1,4-15 | TECHNICAL FIELDS SEARCHED (IPC) |
| X | US 5 637 201 A (RAGUSE BURKHARD [AU] ET AL) 10 June 1997 (1997-06-10) * column 1, lines 6-14 * * column 2, line 41 - column 7, line 35 * * examples * ----- -/-- | 1-15 | C09D G01N C01B C08G A61L A61B C12Q |

The present search report has been drawn up for all claims

| Place of search | Date of completion of the search | Examiner |
|---|---|---|
| Munich | 29 March 2011 | Hartlieb, Ariane |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 10 30 6146

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 03/051506 A1 (UNIV LEEDS [GB]; BUSHBY JAMES RICHARD [GB]; COLYER JOHN [GB]; EVANS ST) 26 June 2003 (2003-06-26)<br>* page 1, lines 3-4 *<br>* page 2, lines 19-21 *<br>* page 3, line 17 - page 8, line 19 *<br>* claims *<br>----- | 1-15 | |
| X | EP 0 539 968 A1 (MINNESOTA MINING & MFG [US]) 5 May 1993 (1993-05-05)<br>* page 4, lines 35-49 *<br>* page 7, line 1 - page 10, line 52 *<br>* page 11, line 1 - page 12, line 11; figure 1 *<br>----- | 1-4,8,9, 11,13-15 | |
| X | WO 96/38726 A1 (ECOLE POLYTECH [CH]; HEYSE STEPHAN [CH]; SAENGER MICHAEL [CH]; SIGRIST) 5 December 1996 (1996-12-05) | 8-15 | |
| A | * page 1, lines 6-10; figure 2 *<br>* page 6, line 5 - page 7 *<br>* page 7, lines 30-33; figure 2 *<br>* page 9, line 17 - page 25, line 11 *<br>* claims *<br>----- | 1-7 | TECHNICAL FIELDS SEARCHED (IPC) |
| X | US 2010/055760 A1 (THUM OLIVER [DE] ET AL) 4 March 2010 (2010-03-04) | 8-14 | |
| A | * paragraphs [0001], [0007] - [0056], [0098] - [0104] *<br>----- | 1-7 | |
| X | US 2006/252094 A1 (ZHOU CHENG [BE] ET AL) 9 November 2006 (2006-11-09) | 8-11, 13-15 | |
| A | * paragraphs [0001], [0002], [0010] - [0053] *<br>----- | 1-7 | |
| A | US 5 808 127 A (NAKAGAWA YOSHIKI [JP] ET AL) 15 September 1998 (1998-09-15)<br>* column 1, lines 6-8 *<br>* column 5, line 15 - column 7, line 49 *<br>-----<br>-/-- | 1-15 | |

The present search report has been drawn up for all claims

2

| Place of search | Date of completion of the search | Examiner |
|---|---|---|
| Munich | 29 March 2011 | Hartlieb, Ariane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 10 30 6146

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 4 230 686 A (SCHOPFLIN GISELA ET AL) 28 October 1980 (1980-10-28)<br>* column 4, line 50 - column 5, line 13 *<br>* page 3, lines 48-68 *<br>----- | 1-15 | |
| A | PUTZIEN S ET AL: "Functionalized polysilalkylene siloxanes (polycarbosiloxanes) by hydrosilylation-Catalysis and synthesis", PROGRESS IN POLYMER SCIENCE, PERGAMON PRESS, OXFORD, GB, vol. 35, no. 6, 1 June 2010 (2010-06-01), pages 687-713, XP026986867, ISSN: 0079-6700 [retrieved on 2010-01-29]<br>* page 688 *<br>* page 697 *<br>----- | 1-15 | |
| A | ROY A: "A review of recent progress in catalyzed homogeneous hydrosilation (hydrosilylation)", ADVANCES IN ORGANOMETALLIC CHEMISTRY, ACADEMIC PRESS, vol. 55, 1 January 2008 (2008-01-01), pages 1-59, XP009146216, ISSN: 0065-3055<br>* pages 22-24 *<br>----- | 1-15 | TECHNICAL FIELDS SEARCHED (IPC) |

The present search report has been drawn up for all claims

| Place of search | Date of completion of the search | Examiner |
|---|---|---|
| Munich | 29 March 2011 | Hartlieb, Ariane |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**ANNEX TO THE EUROPEAN SEARCH REPORT ON EUROPEAN PATENT APPLICATION NO.** EP 10 30 6146

This annex lists the patent family members relating to the patent documents cited in the above-mentioned European search report.
The members are as contained in the European Patent Office EDP file on
The European Patent Office is in no way liable for these particulars which are merely given for the purpose of information.

29-03-2011

| Patent document cited in search report | Publication date | Patent family member(s) | Publication date |
|---|---|---|---|
| US 2007023627 A1 | 01-02-2007 | NONE | |
| US 5637201 A | 10-06-1997 | AT 210731 T | 15-12-2001 |
| | | WO 9407593 A1 | 14-04-1994 |
| | | CA 2145996 A1 | 14-04-1994 |
| | | DE 69331333 D1 | 24-01-2002 |
| | | DE 69331333 T2 | 14-08-2002 |
| | | DK 670751 T3 | 08-04-2002 |
| | | EP 0670751 A1 | 13-09-1995 |
| | | ES 2169725 T3 | 16-07-2002 |
| | | JP 8505123 T | 04-06-1996 |
| | | PT 670751 E | 31-05-2002 |
| WO 03051506 A1 | 26-06-2003 | AU 2002358214 A1 | 30-06-2003 |
| EP 0539968 A1 | 05-05-1993 | AT 168468 T | 15-08-1998 |
| | | AU 662169 B2 | 24-08-1995 |
| | | AU 2612192 A | 06-05-1993 |
| | | CA 2079986 A1 | 01-05-1993 |
| | | DE 69226236 D1 | 20-08-1998 |
| | | DE 69226236 T2 | 11-02-1999 |
| | | JP 5207994 A | 20-08-1993 |
| WO 9638726 A1 | 05-12-1996 | NONE | |
| US 2010055760 A1 | 04-03-2010 | DE 102008041754 A1 | 04-03-2010 |
| | | EP 2163617 A1 | 17-03-2010 |
| US 2006252094 A1 | 09-11-2006 | US 2010204415 A1 | 12-08-2010 |
| US 5808127 A | 15-09-1998 | CA 2205508 A1 | 30-05-1996 |
| | | DE 69530611 D1 | 05-06-2003 |
| | | DE 69530611 T2 | 01-04-2004 |
| | | EP 0829504 A1 | 18-03-1998 |
| | | WO 9616106 A1 | 30-05-1996 |
| | | JP 8143778 A | 04-06-1996 |
| US 4230686 A | 28-10-1980 | AR 192502 A1 | 21-02-1973 |
| | | AT 326270 B | 10-12-1975 |
| | | AU 4890172 A | 16-05-1974 |
| | | BE 791632 A1 | 21-05-1973 |
| | | CA 993359 A1 | 20-07-1976 |
| | | CH 604727 A5 | 15-09-1978 |
| | | CS 195670 B2 | 29-02-1980 |
| | | DD 103387 A5 | 20-01-1974 |
| | | DE 2158226 A1 | 24-05-1973 |

EPO FORM P0459

For more details about this annex : see Official Journal of the European Patent Office, No. 12/82

**ANNEX TO THE EUROPEAN SEARCH REPORT ON EUROPEAN PATENT APPLICATION NO.** EP 10 30 6146

This annex lists the patent family members relating to the patent documents cited in the above-mentioned European search report. The members are as contained in the European Patent Office EDP file on
The European Patent Office is in no way liable for these particulars which are merely given for the purpose of information.

29-03-2011

| Patent document cited in search report | Publication date | Patent family member(s) | Publication date |
|---|---|---|---|
| US 4230686 A | | DK 136399 B | 10-10-1977 |
| | | EG 10868 A | 31-03-1980 |
| | | ES 408716 A1 | 01-11-1975 |
| | | FI 53919 B | 31-05-1978 |
| | | FR 2160410 A1 | 29-06-1973 |
| | | GB 1412969 A | 05-11-1975 |
| | | HU 166024 B | 28-12-1974 |
| | | IE 37160 B1 | 25-05-1977 |
| | | IL 40868 A | 15-10-1975 |
| | | JP 48058118 A | 15-08-1973 |
| | | JP 56047885 B | 12-11-1981 |
| | | NL 7215705 A | 22-05-1973 |
| | | NO 138189 B | 17-04-1978 |
| | | SE 384970 B | 31-05-1976 |
| | | ZA 7208198 A | 25-07-1973 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **OLANDER et al.** *Biomacromolecules,* 2003, vol. 4, 145
- *Biomacromolecules,* 2002, vol. 3, 505
- **CHEN et al.** *Biomaterials,* 2005, vol. 26, 2391
- **THAMI et al.** *J. Appl. Polym. Sci.,* 2007, vol. 104, 1504-1516
- **E. LUKEVICS ; Z. V. BELYAKOUA ; M.G. POMERANTSEVA ; M. G. VORONKOV.** *Journal of organometallic chemistry library,* 1977, vol. 5, 1-179
- **THAMI et al.** *Journal of Polymer Science Part a-Polymer Chemistry,* 2008, vol. 46, 3546-3562
- **NASR et al.** *J. Appl. Polym. Sci.,* 2009, vol. 111, 2785-2797